(19) Europäisches Patentamt
European Patent Office
Office européen des brevets

(11) **EP 1 290 038 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(21) Anmeldenummer: **01955307.2**

(22) Anmeldetag: **13.06.2001**

(51) Int Cl.[7]: **C08F 4/02**, C08F 4/60, C08F 10/00, C08F 110/06

(86) Internationale Anmeldenummer:
**PCT/EP01/06664**

(87) Internationale Veröffentlichungsnummer:
**WO 01/096418 (20.12.2001 Gazette 2001/51)**

(54) **AUF CALCINIERTES HYDROTALCIT GETRÄGERTER KATALYSATORFESTSTOFF ZUR OLEFINPOLYMERISATION**

CATALYTIC SOLID SUPPORTED ON CALCINED HYDROTALCITE FOR OLEFINIC POLYMERISATION

CATALYSEUR SOLIDE SUPPORTE PAR UNE HYDROTALCITE CALCINEE POUR LA POLYMERISATION D'OLEFINES

(84) Benannte Vertragsstaaten:
**AT BE CH CY DE DK ES FI FR GB GR IE IT LI LU MC NL PT SE TR**

(30) Priorität: **13.06.2000 DE 10028432**

(43) Veröffentlichungstag der Anmeldung:
**12.03.2003 Patentblatt 2003/11**

(73) Patentinhaber: **Basell Polyolefine GmbH**
**50389 Wesseling (DE)**

(72) Erfinder:
- **FRAAIJE, Volker**
**60325 Frankfurt (DE)**
- **OBERHOFF, Markus**
**67346 Speyer (DE)**
- **PACZKOWSKI, Nicola**
**Loveland, OH 45140 (US)**
- **SCHOPF, Markus**
**68159 Mannheim (DE)**
- **BIDELL, Wolfgang**
**68159 Mannheim (DE)**
- **WULFF-DÖRING, Joachim**
**67227 Frankenthal (DE)**
- **MIHAN, Shahram**
**67061 Ludwigshafen (DE)**

(56) Entgegenhaltungen:
**EP-A- 0 982 328** **CA-A- 2 237 231**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft einen Katalysatorfeststoff, enthaltend

A) mindestens ein calciniertes Hydrotalcit und

B) mindestens eine Organoübergangsmetallverbindung.

Außerdem betrifft die Erfindung ein Katalysatorsystem, enthaltend den Katalysatorfeststoff, die Verwendung des Katalysatorfeststoffs zur Polymerisation oder Copolymerisation von Olefinen und ein Verfahren zur Herstellung von Polyolefinen durch Polymerisation oder Copolymerisation von Olefinen in Gegenwart des Katalysatorfeststoffs.

Organoübergangsmetallverbindungen wie Metallocenkomplexe sind als Katalysatoren für die Olefinpolymerisation von großem Interesse, weil sich mit ihnen Polyolefine synthetisieren lassen, die mit herkömmlichen Ziegler-Natta-Katalysatoren nicht zugänglich sind. Beispielsweise führen solche Single-Site-Katalysatoren zu Polymeren mit einer engen Molmassenverteilung und einem einheitlichen Comonomereinbau. Damit diese bei Polymerisationsverfahren in der Gasphase oder in Suspension erfolgreich eingesetzt werden können, ist es oftmals von Vorteil, daß die Metallocene in Form eines Feststoffs eingesetzt werden, d.h. daß sie auf einen festen Träger aufgebracht werden. Weiterhin weisen die geträgerten Katalysatoren eine hohe Produktivität auf.

Als feste Trägermaterialien für Katalysatoren für die Olefinpolymerisation werden häufig Kieselgele verwendet, da sich aus diesem Material Partikel herstellen lassen, die in ihrer Größe und Struktur als Träger für die Olefinpolymerisation geeignet sind. Besonders bewährt haben sich dabei sprühgetrocknete Kieselgele, bei denen es sich um sphärische Agglomerate aus kleineren granulären Partikel, den sogenannten Primärpartikeln, handelt.

Die Verwendung von Kieselgelen als Trägermaterial hat sich bei einigen Anwendungen jedoch als nachteilig herausgestellt. Bei der Herstellung von Folienprodukten kann es zur Bildung von Stippen kommen, die durch im Polymer verbleibende Kieselgelpartikel verursacht werden. Problematisch ist auch die Herstellung von Faserprodukten. Hierbei wird üblicherweise vor dem Verspinnen eine Schmelzefiltration durchgeführt. Enthalten die Polymerisate zu große Mengen an partikulären Katalysatorrückständen, kann sich an der Siebplatte ein Überdruck aufbauen. Dieser führt zu erheblichen prozesstechnischen Schwierigkeiten wie verkürzten Filterstandzeiten. Analytisch können partikuläre Katalysatorrückstände auch dadurch erfaßt werden, daß man lichtmikroskopisch Schmelzepräparate der kleinsten Siebfraktion eines gesiebten Polymers, in der sich die Verunreinigung augenfällig anreichern, untersucht

Hydrotalcite sind anorganische Materialien, aus denen sich ebenfalls Partikel in Größen und mit Morphologien herstellen lassen, die sie als Träger für die Herstellung von Katalysatoren für die Olefinpolymerisation geeignet erscheinen lassen. Durch nachfolgende Calcinierung kann u.a. der gewünschte Gehalt an Hydroxylgruppen eingestellt werden. Weiterhin verändert sich auch die Struktur des Kristallaufbaus.

In der kanadischen Patentanmeldung CA-A 2 237 231 ist eine heterogene Olefinpolymerisationskatalysator-Zusammensetzung beschrieben, umfassend einen organometallischen Komplex eines Metalls der Gruppen 3 bis 10 des Periodensystems der Elemente mit mindestens einem Liganden vom Cyclopentadienyl-Typ, einen Aktivator und ein Hydrotalcit, wobei die Katalysatorzusammensetzung durch Sprühtrocknung einer Mischung der Komponenten hergestellt wird.

Aus WO 90/13533 ist bekannt, daß calcinierte Hydrotalcite als Katalysatoren für die Ethoxylierung bzw. Propoxylierung von Fettsäureestern wirken. Weiterhin ist aus DE—A 21 63 851 bekannt, daß calcinierte Hydrotalcite, die nach der Calcinierung halogeniert wurden, sich als Trägermaterialien für Ziegler—Natta—Katalysatoren zur Olefinpolymerisation eignen.

Der Erfindung lag somit die Aufgabe zugrunde, einen Katalysatorfeststoff zur Verfügung zu stellen, mit dem keine oder sehr wenige störende partikuläre Katalysatorrückstände im Polymerisat verbleiben, der mit einer hohen Katalysatoraktivität in Polymerisationsverfahren eingesetzt werden kann und mit dem eine einfache Aufarbeitung der Polymerisate nach der Polymerisation möglich ist

Demgemäß wurde ein Katalysatorfeststoff zur Olefinpolymerisation enthaltend

A) mindestens ein calciniertes Hydrotalcit und

B) mindestens eine Organoübergangsmetallverbindung

gefunden.

Weiterhin wurden ein Katalysatorsystem, enthaltend den Katalysatorfeststoff, die Verwendung des Katalysatorfeststoffs zur Polymerisation oder Copolymerisation von Olefinen und ein Verfahren zur Herstellung von Polyolefinen durch Polymerisation oder Copolymerisation von Olefinen in Gegenwart des Katalysatorfeststoffs gefunden.

Die erfindungsgemäßen Katalysatorfeststoffe eignen sich zur Polymerisation von Olefinen und vor allem zur

Polymerisation von α-Olefinen, d.h. Kohlenwasserstoffen mit endständigen Doppelbindungen. Geeignete Monomere können funktionalisierte olefinisch ungesättigte Verbindungen wie Ester- oder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine fallen. Besonders bevorzugte α-Olefine sind lineare oder verzweigte $C_2$-$C_{12}$-1-Alkene, insbesondere lineare $C_2$-$C_{10}$-1-Alkene wie Ethylen, Propylen, 1-Buten, 1-Penten, 1-Hexen, 1-Hepten, 1-Octen, 1-Decen oder verzweigte $C_2$-$C_{10}$-1-Alkene wie 4-Methyl-1-penten, konjugierte und nicht konjugierte Diene wie 1,3-Butadien, 1,4-Hexadien, oder 1,7-Octadien oder vinylaromatische Verbindungen wie Styrol oder substituiertes Styrol. Es können auch Gemische aus verschiedenen α—Olefinen polymerisiert werden.

Geeignete Olefine sind auch solche, bei denen die Doppelbindung Teil einer cyclischen Struktur ist, die ein oder mehrere Ringsysteme aufweisen kann. Beispiele hierfür sind Cyclopenten, Norbornen, Tetracyclododecen oder Methylnorbornen oder Diene wie 5-Ethyliden-2-norbomen, Norbomadien oder Ethylnorbomadien.

Es können auch Gemische aus zwei oder mehreren Olefinen polymerisiert werden.

Insbesondere lassen sich die erfindungsgemäßen Katalysatorfeststoffe zur Polymerisation oder Copolymerisation von Ethylen oder Propylen einsetzen. Als Comonomere bei der Ethylenpolymerisation werden bevorzugt $C_3$—$C_8$—α—Olefine, insbesondere 1-Buten, 1-Penten, 1-Hexen und/oder 1-Octen verwendet Bevorzugte Comonomere bei der Propylenpolymerisation sind Ethylen und/oder Buten.

Die erfindungsgemäßen Katalysatorfeststoffe enthalten mindestens ein calciniertes Hydrotalcit.

In der Mineralogie wird als Hydrotalcit ein natürliches Mineral mit der Idealformel

$$Mg_6Al_2(OH)_{16}CO_3 \cdot 4\ H_2O$$

bezeichnet, dessen Struktur sich von derjenigen des Brucits $Mg(OH)_2$ ableitet Brucit kristallisiert in einer Schichtstruktur mit den Metallionen in Oktaederlücken zwischen zwei Schichten aus dichtgepackten Hydroxylionen, wobei nur jede zweite Schicht der Oktaederlücken besetzt ist. Im Hydrotalcit sind einige Magnesiumionen durch Aluminiumionen ersetzt, wodurch das Schichtpaket eine positive Ladung erhält. Diese wird durch die Anionen ausgeglichen, die sich zusammen mit Kristallwasser in den Zwischenschichten befinden.

Entsprechende Schichtstrukturen finden sich nicht nur bei Magnesium—Aluminium—Hydroxiden, sondern allgemein bei schichtförmig aufgebauten, gemischten Metallhydroxiden der allgemeinen Formel

$$M(II)_{2x}{}^{2+}M(III)_2{}^{3+}(OH)_{4x+4} \cdot A_{2/n}{}^{n-} \cdot z\ H_2O$$

in der M(II) ein zweiwertiges Metall wie Mg, Zn, Cu, Ni, Co, Mn, Ca und/oder Fe und M(III) ein dreiwertiges Metall wie Al, Fe, Co, Mn, La, Ce und/oder Cr ist, x für Zahlen von 0,5 bis 10 in 0,5 Schritten, A für ein interstitielles Anion und n für die Ladung des interstitiellen Anions steht, die von 1 bis 8, üblicherweise von 1 bis 4 betragen kann und z eine ganze Zahl von 1 bis 6, insbesondere von 2 bis 4 bedeutet. Als interstitielle Anionen kommen organische Anionen wie Alkoholatanionen, Alkylethersulfate, Arylethersulfate oder Glykolethersulfate, anorganische Anionen wie insbesondere Carbonat, Hydrogencarbonat, Nitrat, Chlorid, Sulfat oder $B(OH)_4^-$ oder Polyoxometallanionen wie $Mo_7O_{24}^{6-}$ oder $V_{10}O_{28}^{6-}$ in Betracht. Es kann sich jedoch auch um eine Mischung mehrerer solcher Anionen handeln.

Dementsprechend sollen alle derartigen schichtförmig aufgebauten, gemischten Metallhydroxide als Hydrotalcite im Sinne der vorliegenden Erfindung verstanden werden.

In der Regel werden geeignete Hydrotalcite synthetisch hergestellt Eine Möglichkeit hierzu besteht darin, Salze der Metalle in Lösung zu bringen und unter definierten Bedingungen miteinander zu vermengen. Das in der WO 96/23727 beschriebene Verfahren, Alkoholate der zwei- und dreiwertigen Metalle zu vermischen und die Gemische mit Wasser zu hydrolisieren, ist erfindungsgemäß bevorzugt

Aus Hydrotalciten lassen sich durch Calcinieren, d.h. Erwärmen, die sogenannten calcinierten Hydrotalcite herstellen. Die Herstellung der erfindungsgemäß eingesetzten calcinierten Hydrotalcite erfolgt bei Temperaturen oberhalb von 180°C. Bevorzugt ist eine Calcinierung für eine Zeitdauer von 3 bis 24 Stunden bei Temperaturen von 250°C bis 1000°C und insbesondere von 400°C bis 700°C. Gleichzeitiges Überleiten von Luft oder Inertgas oder Anlegen von Vakuum ist möglich.

Beim Erhitzen geben die natürlichen oder synthetischen Hydrotalcite zunächst Wasser ab, d.h. es erfolgt eine Trocknung. Beim weiteren Erhitzen, dem eigentlichen Calcinieren, wandeln sich die Metallhydroxide unter Abspaltung von Hydroxylgruppen und interstitiellen Anionen in die Metalloxide um, wobei auch in den calcinierten Hydrotalciten noch OH—Gruppen oder interstitielle Anionen wie Carbonat enthalten sein können. Ein Maß hierfür ist der Glühverlust. Dieser ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.

Bei den erfindungsgemäß als Komponente A) eingesetzten calcinierten Hydrotalciten handelt es sich somit

um Mischoxide der zwei- und dreiwertigen Metalle M(II) und M(III), wobei das molare Verhältnis von M(II) zu M(III) in der Regel im Bereich von 0,5 bis 10, bevorzugt von 0,75 bis 8 und insbesondere von 1 bis 4 liegt. Weiterhin können noch übliche Mengen an Verunreinigungen, beispielsweise an Si, Fe, Na, Ca oder Ti enthalten sein.

Bevorzugte calcinierte Hydrotalcite A) sind Mischoxide, bei denen M(II) Magnesium und M(III) Aluminium ist. Entsprechende Aluminium—Magnesium—Mischoxide sind von der Fa. Condea Chemie GmbH, Hamburg unter dem Handelsnamen Puralox Mg erhältlich.

Bei den erfindungsgemäß eingesetzten calcinierten Hydrotalciten muß die Abspaltung von Hydroxylgruppe und interstitiellen Anionen bzw. die Umwandlung in die Metalloxide nicht vollständig sein. D.h. auch teil-calcinierte Hydrotalcite lassen sich zur Herstellung der erfindungsgemäßen Katalysatorfeststoffe einsetzen. Bevorzugt sind calcinierte Hydrotalcite, in denen die strukturelle Umwandlung nahezu oder vollständig abgeschlossen ist Eine Calcinierung, d.h. eine Umwandlung der Struktur läßt sich beispielsweise anhand von Röntgendiffraktogrammen feststellen.

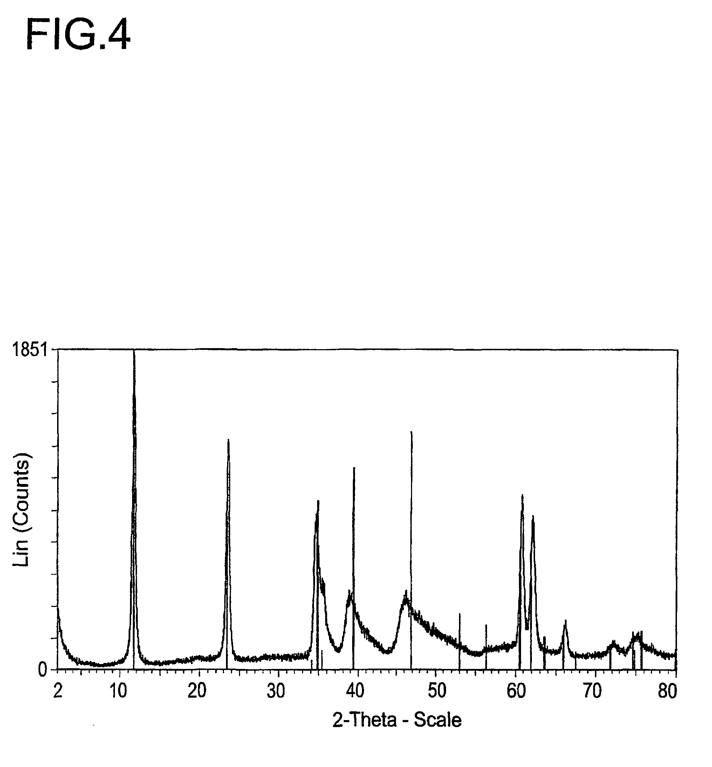

Fig. 1 zeigt beispielhaft ein in einem Pulverdiffraktometer D 5000 der Firma Siemens in Reflexion mit Cu-Kα-Strahlung gemessenes Röntgendiffraktogramm des in Beispiel 1 eingesetzten calcinierten Aluminium—Magnesium—Mischoxids. Dieses zeichnet sich durch Spitzen in der 2-Theta-Skala bei 35 - 37°, 43 - 45° und 62 - 64° aus. Fig. 4 stellt das Röntgendiffraktogramm des Ausgangsmaterials dar, wobei insbesondere Spitzen bei 11 — 14° und 22 — 25° zu beobachten sind. In Fig. 2 ist ein Röntgendiffraktogramm des in Beispiel 6 eingesetzten, teil-calcinierten erfindungsgemäßen Trägermaterials abgebildet. Dieses wurde ebenfalls aus dem in Fig. 4 gezeigten Ausgangsmaterial erhalten. Es sind sowohl die Spitzen des Ausgangsmaterials als auch die eines calcinierten Aluminium—Magnesium—Mischoxids zu erkennen. Dennoch unterscheidet sich das Röntgendiffraktogramm signifikant von dem des nicht calcinierten Ausgangsmaterials.

Die erfindungsgemäß eingesetzten calcinierten Hydrotalcite werden in der Regel als feinteilige Pulver mit einem mittleren Teilchendurchmesser D50 von 5 bis 200 μm, vorzugsweise von 10 bis 150 μm, besonders bevorzugt von 15 bis 100 μm und insbesondere von 20 bis 70 μm eingesetzt.

Die teilchenförmigen calcinierten Hydrotalcite weisen üblicherweise Porenvolumina von 0,1 bis 10 $cm^3/g$, bevorzugt von 0,2 bis 4 $cm^3/g$, und spezifische Oberflächen von 30 bis 1000 $m^2/g$, bevorzugt von 50 bis 500 $m^2/g$ und insbesondere von 100 bis 300 $m^2/g$ auf.

Das erfindungsgemäße Trägermaterial kann zusätzlich auch chemisch behandelt werden, wobei übliche Trocknungsmittel wie Metallalkyle, Chlorsilane oder $SiCl_4$ zum Einsatz kommen können. Entsprechende Behandlungsmethoden werden z.B. in WO 00/31090 beschrieben.

Als Organoübergangsmetallverbindung B) kommen prinzipiell alle organische Gruppen enthaltenden Verbindungen der Übergangsmetalle der 3. bis 12. Gruppe des Periodensystems oder der Lanthaniden in Betracht, die bevorzugt nach Reaktion mit den Komponenten C) und/oder D) oder D') für die Olefinpolymerisation aktive Katalysatoren bilden. Üblicherweise handelt es sich hierbei um Verbindungen, bei denen mindestens ein ein- oder mehrzähniger Ligand über Sigma— oder Pi—Bindung an das Zentralatom gebunden ist. Als Liganden kommen sowohl solche in Betracht, die Cyclopentadienylreste enthalten, als auch solche, die frei von Cyclopentadienylresten sind. In Chem. Rev. 2000, Vol. 100, Nr. 4 wird eine Vielzahl solcher für die Olefinpolymerisation geeigneter Verbindungen B) beschrieben. Weiterhin sind auch mehrkernige Cyclopentadienylkomplexe für die Olefinpolymerisation geeignet.

Geeignete Verbindungen B) sind zum Beispiel Übergangsmetallkomplexe mit mindestens einem Liganden der allgemeinen Formeln F—I bis F-V,

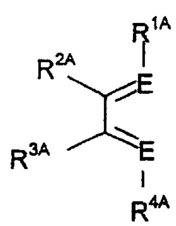

F–I

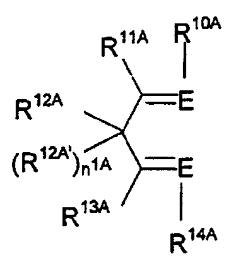

F–III

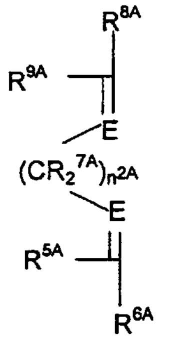

F–II

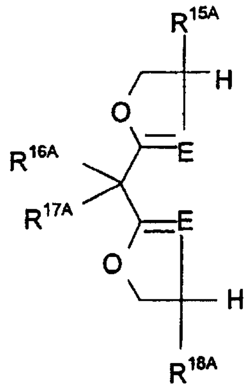

F–IV

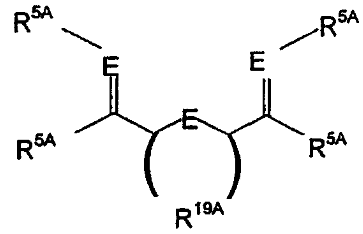

F–V

wobei das Übergangsmetall ausgewählt ist aus den Elementen Ti, Zr, Hf, Sc, V, Nb, Ta, Cr, Mo, W, Fe, Co, Ni, Pd, Pt oder ein Element der Seltenerd-Metalle. Bevorzugt sind hierbei Verbindungen mit Nickel, Eisen, Kobalt und Palladium als Zentralmetall.

E ist ein Element der 15. Gruppe des Periodensystems der Elemente bevorzugt N oder P, wobei N besonders bevorzugt ist. Die zwei oder drei Atome E in einem Molekül können dabei gleich oder verschieden sein.

Die Reste $R^{1A}$ bis $R^{19A}$, die innerhalb eines Ligandsystems F-I bis F-V gleich oder verschieden sein können, stehen dabei für folgende Gruppen:

$R^{1A}$ und $R^{4A}$ unabhängig voneinander für Kohlenwasserstoff- oder substituierte Kohlenwasserstoffreste, bevorzugt sind dabei Kohlenwasserstoffreste bei denen das dem Element E benachbarte Kohlenstoffatom mindestens mit zwei Kohlenstoffatomen verbunden ist

$R^{2A}$ und $R^{3A}$ unabhängig voneinander für Wasserstoff, Kohlenwasserstoff- oder substituierte Kohlenwasserstoffreste, wobei $R^{2A}$ und $R^{3A}$ auch zusammen ein Ringsystem bilden können, in dem auch ein oder mehrere Heteroatome vorhanden sein können,

$R^{6A}$ und $R^{8A}$ unabhängig voneinander für Kohlenwasserstoff- oder substituierte Kohlenwasserstoffreste,

$R^{5A}$ und $R^{9A}$ unabhängig voneinander für Wasserstoff, Kohlenwasserstoff- oder substituierte Kohlenwasserstoffreste,

wobei

$R^{6A}$ und $R^{5A}$ bzw. $R^{8A}$ und $R^{9A}$ auch zusammen ein Ringsystem bilden können,

$R^{7A}$ unabhängig voneinander für Wasserstoff, Kohlenwasserstoff- oder substituierte Kohlenwasserstoffreste, wobei zwei $R^{7A}$ auch zusammen ein Ringsystem bilden können,

$R^{10A}$ und $R^{14A}$ unabhängig voneinander für Kohlenwasserstoff- oder substituierte Kohlenwasserstoffreste,

$R^{11A}$, $R^{12A}$, $R^{12A'}$ und $R^{13A}$ unabhängig voneinander für Wasserstoff, Kohlenwasserstoff oder substituierte Kohlenwasserstoffreste, wobei auch zwei oder mehr geminale oder vicinale Reste $R^{11A}$, $R^{12A}$, $R^{12A'}$ und $R^{13A}$ zusammen ein Ringsystem bilden können,

$R^{15A}$ und $R^{18A}$ unabhängig voneinander für Wasserstoff, Kohlenwasserstoff- oder substituierte Kohlenwasserstoffreste,

$R^{16A}$ und $R^{17A}$ unabhängig voneinander für Wasserstoff, Kohlenwasserstoff- oder sub- stituierte

Kohlenwasserstoffreste,

$R^{19A}$ für einen organischer Rest, der ein 5— bis 7—gliedriges substituiertes oder unsubstituiertes, insbesondere ungesättigtes oder aromatisches heterocyclisches Ringsystem bildet, insbesondere zusammen mit E ein Pyridin-System,

$n^{1A}$ für 0 oder 1, wobei F-III für $n^{1A}$ gleich 0 negativ geladen ist und

$n^{2A}$ für eine ganze Zahl zwischen 1 und 4, bevorzugt 2 oder 3.

Besonders geeignete Übergangsmetallkomplexe mit Liganden der allgemeinen Formeln F—I bis F-IV sind beispielsweise Komplexe der Übergangsmetalle Fe, Co, Ni, Pd oder Pt mit Liganden der Formel F—I. Besonders bevorzugt sind Diiminkomplexe des Ni oder Pd, z.B.:

Di(2,6—di-i-propyl-phenyl)-2,3—dimethyl—diazabutadien-palladiumdichlorid
Di(di—i—propyl—phenyl)-2,3—dimethyl—diazabutadien—nickel—dichlorid
Di(2,6—di-i-propyl-phenyl)-dimethyl-diazabutadien-palladium—dimethyl
Di(2,6—di-i-propyl-phenyl)-2,3-dimethyl-diazabutadien-nickel—dimethyl
Di(2,6-dimethyl-phenyl)-2,3-dimethyl—diazabutadien—palladiumdichlorid
Di(2,6—dimethyl—phenyl)—2,3-dimethyl—diazabutadien—nickel—dichlorid
Di(2,6—dimethyl-phenyl)-2,3-dimethyl—diazabutadien-palladium—djmethyl
Di(2,6-dimethyl—phenyl)-2,3—dimethyl-diazabutadien-nickel—dimethyl
Di(2-methyl-phenyl)—2,3—dimethyl—diazabutadien—palladium—dichlorid
Di(2—methyl-phenyl)—2,3—dimethyl—diazabutadien—nickel—dichlorid
Di(2—methyl-phenyl)-2,3—dimethyl-diazabutadien-palladium—dimethyl
Di(2—methyl-phenyl)-2,3—dimethyl—diazabutadien-nickel—dimethyl
Diphenyl-2,3—dimethyl—diazabutadien—palladium—dichlorid
Diphenyl—2,3—dimethyl—diazabutadien—nickel—dichlorid
Diphenyl-2,3—dimethyl—diazabutadien—palladium—dimethyl
Diphenyl—2,3—dimethyl—diazabutadien—nickel—dimethyl
Di(2,6-dimethyl-phenyl)—azanaphten—palladium—dichlorid
Di(2,6—dimethyl—phenyl)—azanaphten—nickel—dichlorid
Di(2,6—dimethyl—phenyl)—azanaphten—palladium—dimethyl
Di(2,6—dimethyl—phenyl)—azanaphten—nickel—dimethyl
1,1'-Dipyridyl—palladium—dichlorid
1,1'-Dipyridyl—nickel—dichlorid
1,1'-Dipyridyl—palladium—dimethyl
1,1'-Dipyridyl—nickel—dimethyl

Besonders geeignete Verbindungen F—V sind solche, die in J. Am. Chem. Soc. 120, S. 4049 ff. (1998), J. Chem. Soc., Chem. Commun. 1998, 849 beschrieben sind. Als bevorzugte Komplexe mit Liganden F-V lassen sich 2,6-bis(imino)pyridyl-Komplexe der Übergangsmetalle Fe, Co, Ni, Pd oder Pt, insbesondere Fe einsetzen.

Als Organoübergangsmetallverbindung B) können auch Iminophenolat-Komplexe verwendet werden, wobei die Liganden beispielsweise ausgehend von substituierten oder unsubstituierten Salicylaldehyden und primären Aminen, insbesondere substituierten oder unsubstituierten Arylaminen, hergestellt werden. Auch Übergangsmetallkomplexe mit Pi-Liganden, die im Pi-System ein oder mehrere Heteroatome enthalten, wie beispielsweise der Boratabenzolligand, das Pyrrolylanion oder das Phospholylanion, lassen sich als Organoübergangsmetallverbindungen B) einsetzen.

Besonders gut geeignete Organoübergangsmetallverbindungen B) sind solche mit mindestens einem Cyclopentadienyltyp-Liganden, die gemeinhin als Metallocenkomplexe bezeichnet werden. Hierbei eignen sich besonders Metallocenkomplexe der allgemeinen Formel (I)

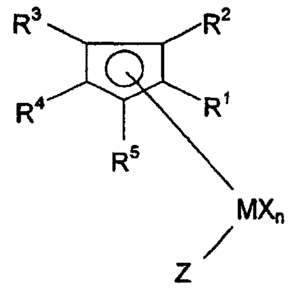

(I)

in der die Substituenten und Indizes folgende Bedeutung haben:

M Titan, Zirkonium, Hafnium, Vanadium, Niob, Tantal, Chrom, Molybdän oder Wolfram, sowie Elemente der 3. Gruppe des Periodensystems und der Lanthaniden,

X Fluor, Chlor, Brom, Jod, Wasserstoff, $C_1$-$C_{10}$-Alkyl, $C_2$-$C_{10}$-Alkenyl, $C_6$-$C_{15}$-Aryl, Alkylaryl mit 1 bis 10 C—Atomen im Alkylrest und 6 bis 20 C-Atomen im Arylrest, -$OR^6$ oder —$NR^6R^7$, oder zwei Reste X für einen substituierten oder unsubstituierten Dienliganden, insbesondere einen 1,3-Dienliganden, stehen, und

n 1, 2 oder 3 ist, wobei n entsprechend der Wertigkeit von M den Wert aufweist, bei dem der Metallocenkomplex der allgemeinen Formel (I) ungeladen vorliegt,

wobei

$R^6$ und $R^7$ $C_1$-$C_{10}$-Alkyl, $C_6$-$C_{15}$-Aryl, Alkylaryl, Arylalkyl, Fluoralkyl oder Fluoraryl mit jeweils 1 bis 10 C—Atomen im Alkylrest und 6 bis 20 C-Atomen im Arylrest bedeuten und

die Reste X gleich oder verschieden sind und gegebenenfalls miteinander verbunden sind,

$R^1$ bis $R^5$ Wasserstoff, $C_1$—$C_{22}$—Alkyl, 5- bis 7-gliedriges Cycloalkyl oder Cycloalkenyl, die ihrererseits durch $C_1$—$C_{10}$—Alkyl substituiert sein können, $C_2$—$C_{22}$—Alkenyl, $C_6$—$C_{22}$—Aryl, Alkylaryl oder Arylalkyl, wobei auch zwei benachbarte Reste gemeinsam für 4 bis 44 C—Atome aufweisende gesättigte oder ungesättigte cyclische Gruppen stehen können, oder $Si(R^8)_3$ mit

$R^8$ gleich oder verschieden $C_1$—$C_{10}$—Alkyl, $C_3$—$C_{10}$—Cycloalkyl, $C_6$—$C_{15}$—Aryl, $C_1$— $C_4$—Alkoxy oder $C_6$—$C_{10}$—Aryloxy sein kann und
für X oder

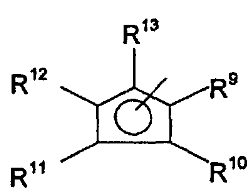

steht,

wobei die Reste

$R^9$ bis $R^{13}$ Wasserstoff, $C_1$—$C_{22}$—Alkyl, 5— bis 7—gliedriges Cycloalkyl oder Cycloalkenyl, die ihrererseits durch $C_1$—$C_{10}$—Alkyl substituiert sein können, $C_2$—$C_{22}$—Alkenyl, $C_6$—$C_{22}$—Aryl, Alkylaryl oder Arylalkyl, wobei auch zwei benachbarte Reste gemeinsam für 4 bis 44 C—Atome aufweisende gesättigte oder ungesättigte cyclische Gruppen stehen können, oder $Si(R^{14})_3$ mit

$R^{14}$ gleich oder verschieden $C_1$—$C_{10}$—Alkyl, $C_3$—$C_{10}$—Cycloalkyl, $C_6$—$C_{15}$—Aryl, $C_1$— $C_4$—Alkoxy oder $C_6$—$C_{10}$—Aryloxy bedeuten,

oder wobei die Reste $R^4$ und Z gemeinsam eine Gruppierung —$R^{15}$—A— bilden, in der

$R^{15}$

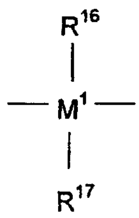,
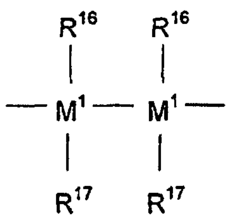,
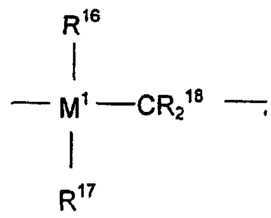,

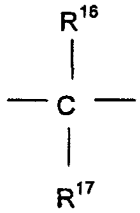,
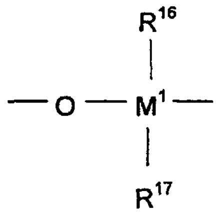,
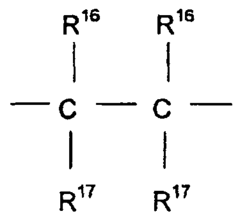,

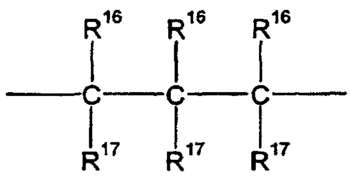,
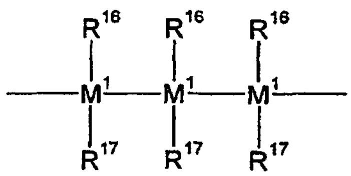

= $BR^{16}$,= $BNR^{16}R^{17}$, = $AlR^{16}$, —Ge—, —Sn—, —O—, —S—, = SO, = $SO_2$, = $NR^{16}$, = CO, = $PR^{16}$ oder = $P(O)R^{16}$ ist,

wobei

$R^{16}$, $R^{17}$ und $R^{18}$ gleich oder verschieden sind und jeweils ein Wasserstoffatom, ein Halogenatom, eine Trimethylsilylgruppe, eine $C_1$—$C_{10}$—Alkylgruppe, eine $C_1$—$C_{10}$—Fluoralkylgruppe, eine $C_6$—$C_{10}$—Fluorarylgruppe, eine $C_6$—$C_{10}$—Arylgruppe, eine $C_1$— $C_{10}$—Alkoxygruppe, eine $C_7$-$C_{15}$-Alkylaryloxygruppe, eine $C_2$—$C_{10}$— Alkenylgruppe, eine $C_7$—$C_{40}$—Arylalkylgruppe, eine $C_8$—$C_{40}$—Arylalkenylgruppe oder eine $C_7$—$C_{40}$—Alkylarylgruppe bedeuten oder wobei zwei benachbarte Reste jeweils mit den sie verbindenden Atomen einen 4 bis 15 C—Atome aufweisenden gesättigten oder ungesättigten Ring bilden, und

$M^1$ Silicium, Germanium oder Zinn ist,

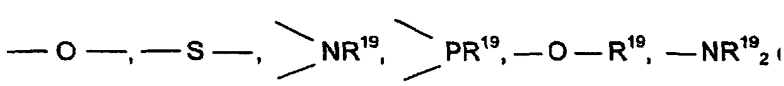

oder

A — $PR^{19}_2$ bedeuten, mit

| | |
|---|---|
| $R^{19}$ | unabhängig voneinander $C_1$—$C_{10}$—Alkyl, $C_6$—$C_{15}$—Aryl, $C_3$—$C_{10}$—Cycloalkyl, $C_7$-$C_{18}$—Alkylaryl oder $Si(R^{20})_3$, |
| $R^{20}$ | Wasserstoff, $C_1$—$C_{10}$—Alkyl, $C_6$—$C_{15}$—Aryl, das seinerseits mit $C_1$—$C_4$—Alkylgruppen substituiert sein kann oder $C_3$—$C_{10}$—Cycloalkyl |

oder wobei die Reste $R^4$ und $R^{12}$ gemeinsam eine Gruppierung —$R^{15}$— bilden.

Bevorzugt sind die Reste X in der allgemeinen Formel (I) gleich, bevorzugt Fluor, Chlor, Brom, $C_1$ bis $C_7$-Alkyl, oder Aralkyl, insbesondere Chlor, Methyl oder Benzyl.

Von den Metallocenkomplexen der allgemeinen Formel (I) sind

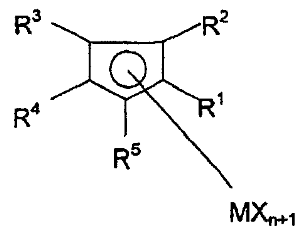

(Ia),

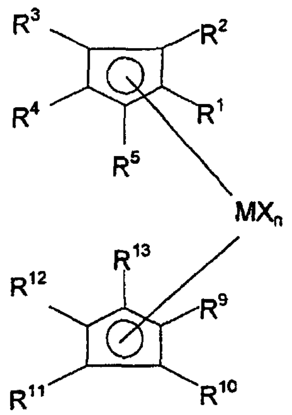

(Ib),

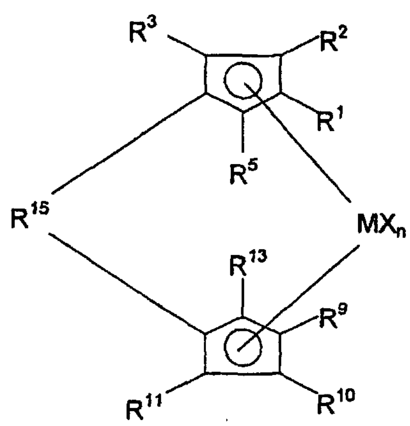

(Ic)

und

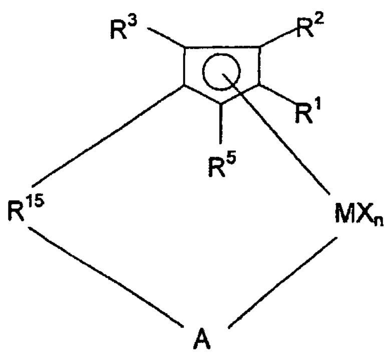

(Id)

bevorzugt

Von den Verbindungen der Formel (Ia) sind insbesondere diejenigen bevorzugt, in denen

M Titan, Zirkonium oder Hafnium,

X Chlor, $C_1$—$C_4$—Alkyl, Phenyl, Alkoxy oder Aryloxy

n die Zahl 1 oder 2 und

$R^1$ bis $R^5$ Wasserstoff oder $C_1$-$C_4$-Alkyl bedeuten.

Von den Verbindungen der Formel (Ib) sind als bevorzugt diejenigen zu nennen, bei denen

M für Titan, Zirkonium oder Hafnium steht,

X Chlor, $C_1$—$C_4$—Alkyl oder Benzyl bedeuten, oder zwei Reste X für einen substituierten oder unsubstituierten Butadienliganden stehen,

n die Zahl 2,

R' bis $R^5$ Wasserstoff, $C_1$-$C_4$-Alkyl oder $Si(R^8)_3$ und

$R^9$ bis $R^{13}$ Wasserstoff, $C_1$-$C_4$-Alkyl oder $Si(R^{14})_3$

oder jeweils zwei Reste $R^1$ bis $R^5$ und/oder $R^9$ bis $R^{13}$ zusammen mit dem $C_5$-Ring ein Indenyl - oder substituiertes Indenyl-System bedeuten.

Insbesondere sind die Verbindungen der Formel (Ib) geeignet, in denen die Cyclopentadienylreste gleich sind.

Beispiele für besonders geeignete Verbindungen sind u.a.:

Bis(cyclopentadienyl)zirkoniumdichlorid,
Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis(n-butylcyclopentadienyl)zirkoniumdichlorid,
Bis(1-n-butyl-3-methylcyclopentadienyl)zirkoniumdichlorid,
Bis(indenyl)zirkoniumdichlorid,
Bis(tetrahydroindenyl)zirkoniumdichlorid und
Bis(trimethylsilylcyclopentadienyl)zirkoniumdichlorid

sowie die entsprechenden Dimethylzirkoniumverbindungen.

Von den Verbindungen der Formel (Ic) sind diejenigen besonders geeignet, in denen

$R^1$ und $R^9$ gleich oder verschieden sind und für Wasserstoff oder $C_1$-$C_{10}$-Alkylgruppen stehen,

$R^5$ und $R^{13}$ gleich oder verschieden sind und für Wasserstoff, eine Methyl-, Ethyl-, iso-Propyl- oder tert.-Butylgruppe stehen,

$R^3$ und $R^{11}$ $C_1$-$C_4$-Alkyl und

$R^2$ und $R^{10}$ Wasserstoff bedeuten

oder
zwei benachbarte Reste $R^2$ und $R^3$ sowie $R^{10}$ und $R^{11}$ gemeinsam für 4 bis 44 C-Atome aufweisende gesättigte oder ungesättigte cyclische Gruppen stehen,

$R^{15}$ für

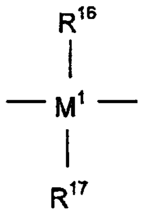

oder

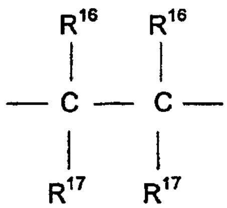

steht,
oder = $BR^{16}$ oder = $BNR^{16}R^{17}$ bedeuten,

M für Titan, Zirkonium oder Hafnium und

X gleich oder verschieden für Chlor, $C_1$—$C_4$—Alkyl, Benzyl, Phenyl oder $C_7$-$C_{15}$-Alkylaryloxy stehen.

Insbesondere geeignete Verbindungen der Formel (Ic) sind solche der Formel (Ic')

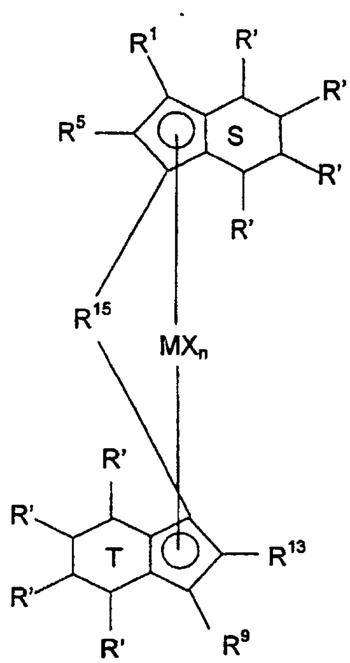

**(Ic'),**

in der
die Reste R' gleich oder verschieden sind und Wasserstoff, $C_1$—$C_{10}$—Alkyl oder $C_3$-$C_{10}$-Cycloalkyl, bevorzugt Methyl, Ethyl, Isopropyl oder Cyclohexyl, $C_6$—$C_{20}$—Aryl, bevorzugt Phenyl, Naphthyl oder Mesityl, $C_7$—$C_{40}$—Arylalkyl,

$C_7$—$C_{40}$—Alkylaryl, bevorzugt 4-tert.-Butylphenyl oder 3,5-Di-tert.-butylphenyl, oder $C_8$—$C_{40}$—Arylalkenyl bedeuten,
$R^5$ und $R^{13}$ gleich oder verschieden sind und für Wasserstoff, $C_1$-$C_6$-Alkyl, bevorzugt Methyl, Ethyl, Isopropyl, n-Propyl, n-Butyl, n-Hexyl oder tert.-Butyl, stehen,
und die Ringe S und T gleich oder verschieden, gesättigt, ungesättigt oder teilweise gesättigt sind.

Die Indenyl- bzw. Tetrahydroindenylliganden der Metallocene der Formel (Ic') sind bevorzugt in 2—, 2,4—, 4,7—, 2,4,7—, 2,6—, 2,4,6—, 2,5,6—, 2,4,5,6— oder 2,4,5,6,7-Stellung, insbesondere in 2,4-Stellung substituiert, wobei für den Substitutionsort die folgende Nomenklatur gilt:

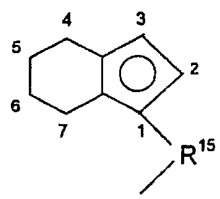

Als Komplexverbindungen (Ic') werden bevorzugt verbrückte Bis-Indenyl-Komplexe in der Racoder Pseudo-Rac-Form eingesetzt, wobei es sich bei der pseudo-Rac-Form um solche Komplexe handelt, bei denen die beiden Indenyl-Liganden ohne Berücksichtigung aller anderen Substituenten des Komplexes relativ zueinander in der Rac-Anordnung stehen.

Beispiele für besonders geeignete Komplexverbindungen (Ic) und (Ic') sind u.a.

Dimethylsilandiylbis(cyclopentadienyl)zirkoniumdichlorid,
Dimethylsilandiylbis(indenyl)zirkoniumdichlorid,
Dimethylsilandiylbis(tetrahydroindenyl)zirkoniumdichlorid,
Ethylenbis(cyclopentadienyl)zirkoniumdichlorid,
Ethylenbis(indenyl)zirkoniumdichlorid,
Ethylenbis(tetrahydroindenyl)zirkoniumdichlorid,
Tetramethylethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(3-tert.butyl-5-ethylcyclopentadienyl)-zirkoniumdichlorid,
Dimethylsilandiylbis(2-methylindenyl)zirkoniumdichlorid,
Dimethylsilandiylbis(2-isopropylindenyl)zirkoniumdichlorid,
Dimethylsilandiylbis(2-tert.butylindenyl)zirkoniumdichlorid,
Diethylsilandiylbis(2-methylindenyl)zirkoniumdibromid,
Dimethylsilandiylbis(3-methyl-5-methylcyclopentadienyl)— zirkoniumdichlorid,
Dimethylsilandiylbis(3-ethyl-5-isopropylcyclopentadienyl)-zirkoniumdichlorid,
Dimethylsilandiylbis(2-ethylindenyl)zirkoniumdichlorid,
Dimethylsilandiylbis(2-methyl—4,5—benzindenyl)zirkoniumdichlorid
Dimethylsilandiylbis(2-ethyl—4,5—benzindenyl)zirkoniumdichlorid
Methylphenylsilandiylbis(2-methyl—4,5—benzindenyl)— zirkoniumdichlorid,
Methylphenylsilandiylbis(2-ethyl—4,5—benzindenyl)— zirkoniumdichlorid,
Diphenylsilandiylbis(2-methyl—4,5—benzindenyl)zirkoniumdichlorid,
Diphenylsilandiylbis(2-ethyl—4,5—benzindenyl)zirkoniumdichlorid, Diphenylsilandiylbis(2-methylindenyl)hafniumdichlorid,
Dimethylsilandiylbis(2—methyl—4-phenyl-indenyl)-zirkoniumdichlorid,
Dimethylsilandiylbis(2—ethyl—4—phenyl-indenyl)-zirkoniumdichlorid,
Dimethylsilandiylbis(2—methyl—4-(1-naphthyl)-indenyl)-zirkoniumdichlorid,
Dimethylsilandiylbis(2—ethyl—4-(1-naphthyl)-indenyl)-zirkoniumdichlorid,
Dimethylsilandiylbis(2—propyl—4-(1-naphthyl)-indenyl)-zirkoniumdichlorid,
Dimethylsilandiylbis(2—i-butyl—4-(1-naphthyl)-indenyl)-zirkoniumdichlorid,
Dimethylsilandiylbis(2—propyl—4-(9-phenanthryl)-indenyl)-zirkoniumdichlorid,
Dimethylsilandiylbis(2—methyl—4—isopropylindenyl)-zirkoniumdichlorid,
Dimethylsilandiylbis(2,7—dimethyl—4—isopropylindenyl)-zirkoniumdichlorid,
Dimethylsilandiylbis(2—methyl—4,6—diisopropylindenyl)-zirkoniumdichlorid,
Dimethylsilandiylbis(2—methyl—4[p-trifluormethylphenyl]indenyl)— zirkoniumdichlorid,

Dimethylsilandiylbis(2—methyl—4-[3',5'-dimethylphenyl]indenyl)— zirkoniumdichlorid,
Dimethylsilandiylbis(2—methyl—4-[4'-tert.butylphenyl]indenyl)— zirkoniumdichlorid,
Diethylsilandiylbis(2—methyl—4-[4'—tert.butylphenyl]indenyl)— zirkoniumdichlorid,
Dimethylsilandiylbis(2—ethyl—4-[4'—tert.butylphenyl]indenyl)— zirkoniumdichlorid,
Dimethylsilandiylbis(2—propyl—4-[4'—tert.butylphenyl]indenyl)— zirkoniumdichlorid,
Dimethylsilandiylbis(2—isopropyl—4-[4'—tert.butylphenyl]indenyl)— zirkoniumdichlorid,
Dimethylsilandiylbis(2—n-butyl—4-[4'—tert.butylphenyl]indenyl)— zirkoniumdichlorid,
Dimethylsilandiylbis(2—hexyl—4-[4'—tert.butylphenyl]indenyl)— zirkoniumdichlorid,
Dimethylsilandiyl(2—isopropyl—4-phenyl-indenyl)— (2—methyl—4-phenyl-indenyl)zirkoniumdichlorid,
Dimethylsilandiyl(2—isopropyl—4-(1-naphthyl)-indenyl)— (2—methyl—4-(1-naphthyl)-indenyl)zirkoniumdichlorid,
Dimethylsilandiyl(2—isopropyl—4-(4'—tert.butylphenyl]indenyl)— (2—methyl—4-[4'—tertbutylphenyl]indenyl) zirkoniumdichlorid,
Dimethylsilandiyl(2—isopropyl—4-[4'—tert.butylphenyl]indenyl)— (2—ethyl—4-[4'—tert.butylphenyl]indenyl) zirkoniumdichlorid,
Dimethylsilandiyl(2—isopropyl—4-[4'—tert.butylphenyl]indenyl)— (2—methyl—4-[3',5'—bis—tert.butylphenyl] indenyl)zirkonium-dichlorid
Dimethylsilandiyl(2—isopropyl—4-[4'—tert.butylphenyl]indenyl)— (2—methyl—4-[1'—naphthyl]indenyl)zirkoniumdichlorid
und Ethylen(2—isopropyl—4-[4'—tert.butylphenyl]indenyl)— (2—methyl—4-[4'—tert.butylphenyl]indenyl)zirkoniumdichlorid

sowie die entsprechenden Dimethyl-, Monochloromono(alkylaryloxy)- und Di-(alkylaryloxy)-zirkoniumverbindungen.

Bei den Verbindungen der allgemeinen Formel (Id) sind als besonders geeignet diejenigen zu nennen, in denen

M für Titan oder Zirkonium, insbesondere Titan, und

X für Chlor, $C_1$—$C_4$—Alkyl oder Phenyl stehen oder zwei Reste X für einen substituierten oder unsubstituierten Butadienliganden stehen.

$R^{15}$ für

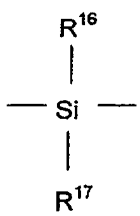

oder

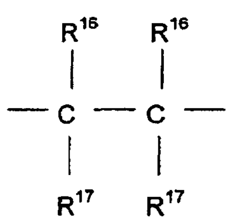

und,

A für

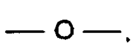

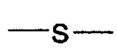

oder

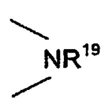

steht,

$R^1$ bis $R^3$ und $R^5$ für Wasserstoff, $C_1$-$C_{10}$-Alkyl, bevorzugt Methyl, $C_3$-$C_{10}$-Cycloalkyl, $C_6$-$C_{15}$-Aryl oder $Si(R^8)_3$ stehen, oder wobei zwei benachbarte Reste für 4 bis 12 C-Atome aufweisende cyclische Gruppen stehen, wobei besonders bevorzugt alle $R^1$ bis $R^3$ und $R^5$ Methyl sind.

Eine andere Gruppe von Verbindungen der Formel (Id), die besonders geeignet sind, die diejenigen in den

M für Titan oder Chrom bevorzugt in der Oxidationsstufe III und

X für Chlor, $C_1$—$C_4$—Alkyl oder Phenyl stehen oder zwei Reste X für einen substituierten oder unsubstituierten Butadienliganden stehen,

$R^{15}$ für

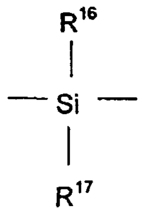

oder

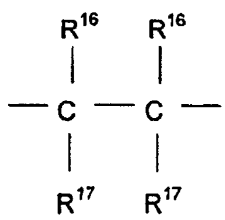

und

A für — O — $R^{19}$, — $NR^{19}_2$ oder — $PR^{19}_2$ steht,

$R^1$ bis $R^3$ und $R^5$ für Wasserstoff, $C_1$-$C_{10}$-Alkyl, $C_3$-$C_{10}$-Cycloalkyl, $C_6$-$C_{15}$-Aryl oder $Si(R^8)_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob, Tantal oder Chrom, bevorzugt ist

Beispiele für entsprechende Herstellungsverfahren sind u.a. im Joumal of Organometallic Chemistry, 369 (1989), 359-370 beschrieben.

Weitere geeignete Organoübergangsmetallverbindungen B) sind Metallocene, mit mindestens einem Liganden, der aus einem Cyclopentadienyl oder Heterocyclopentadienyl mit einem ankondensierten Heterocyclus gebildet wird, wobei in den Heterocyclen mindestens ein C-Atom durch ein Heteroatom bevorzugt aus der Gruppe 15 oder 16 des Periodensystems und insbesondere durch Stickstoff oder Schwefel ersetzt ist. Derartige Verbindungen sind beispielsweise in der WO 98/22486 beschrieben. Dies sind insbesondere:

Dimethylsilandiyl-(2—methyl—4—phenyl-indenyl)-(2,5-dimethyl-N-phenyl-4-azapentalen)zirkoniumdichlorid,
Dimethylsilandiylbis(2—methyl—4—phenyl-4-hydroazulenyl)zirkonium-dichlorid,
Dimethylsilandiylbis(2—ethyl—4—phenyl-4-hydroazulenyl)zirkonium-dichlorid,

Erfindungsgemäß geeignete Übergangsmetallverbindungen B) sind außerdem substituierte Monocyclopentadienyl-, Monoindenyl-, Monofluorenyl- oder Heterocyclopentadienylkomplexe von Chrom, Molybdän oder Wolfram, wobei mindestens einer der Substituenten am Cyclopentadienylring eine rigide, nicht nur ausschließlich über $sp^3$ hybridisierte Kohlenstoff- oder Silicium-Atome gebundene Donorfunktion trägt. Die direkteste Verknüpfung zur Donorfunktion enthält dazu mindestens ein sp oder $sp^2$ hybridisiertes Kohlenstoffatom, bevorzugt ein bis drei $sp^2$ hybridisierte Kohlenstoffatome. Bevorzugt enthält die direkte Verknüpfung eine ungesättigte Doppelbindung, einen Aromaten oder bildet mit dem Donor ein partiell ungesättigtes oder aromatisches heterocyclisches System aus.

Der Cyclopentadienylring kann bei diesen Übergangsmetallverbindungen auch ein Heterocyclopentadienyl-Ligand sein, d.h. das mindestens ein C-Atom auch durch ein Heteroatom aus der Gruppe 15 oder 16 ersetzt sein kann. In diesem Fall ist bevorzugt ein $C_5$-Ring-Kohlenstoffatom durch Phosphor ersetzt. Insbesondere ist der Cyclopentadienylring mit weiteren Alkylgruppen substituiert, welche auch einen fünf oder sechsgliedrigen Ring bilden können, wie z.B. Tetrahydroindenyl, Indenyl, Benzindenyl oder Fluorenyl.

Als Donor kommen ein Element der 15. oder 16. Gruppe des Periodensystems enthaltende neutrale funktionelle Gruppen, z.B. Amin, Imin, Carboxamid, Carbonsäureester, Keton (Oxo), Ether, Thioketon, Phosphin, Phosphit, Phosphinoxid, Sulfonyl, Sulfonamid, oder unsubstituierte, substituierte oder kondensierte, partiell ungesättigte heterocyclische oder heteroaromatische Ringsysteme in Betracht.

Bevorzugt werden substituierte Monocyclopentadienyl-, Monoindenyl-, Monofluorenyl- oder Heterocyclopentadienylkomplexe der allgemeinen Formel (II)

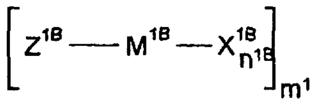 (II),

eingesetzt, worin die Variablen folgende Bedeutung besitzen:

$M^{1B}$ Chrom, Molybdän oder Wolfram bedeutet,
$Z^{1B}$ durch die folgende allgemeine Formel (IIa)

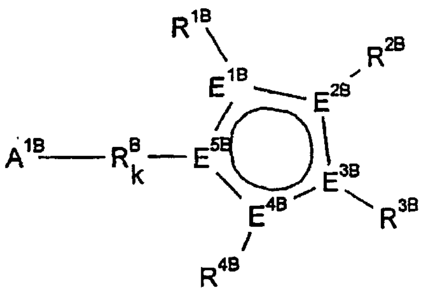 (IIa)

beschrieben ist, worin die Variablen folgende Bedeutung besitzen:

$E^{1B}$ - $E^{5B}$ Kohlenstoff oder, für maximal ein Atom $E^{1B}$ bis $E^{5B}$, Phosphor oder Stickstoff,

$A^{1B}$ $NR^{5B}R^{6B}$, $PR^{5B}R^{6B}$, $OR^{5B}$, $SR^{5B}$ oder ein unsubstituiertes, substituiertes oder kondensiertes, partiell ungesättigtes heterocyclisches oder heteroaromatisches Ringsystem,

$R^B$ eine der folgenden Gruppen:

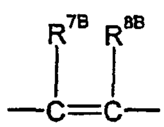 , 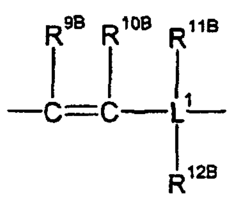 ,

und zusätzlich, falls $A^{1B}$ ein unsubstituiertes, substituiertes oder kondensiertes, partiell ungesättigtes heterocyclisches oder heteroaromatisches Ringsystem ist, auch

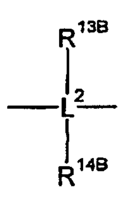 ,

wobei

$L^1$, $L^2$ Silizium oder Kohlenstoff bedeutet,

k — 1 oder, wenn $A^{1B}$ ein unsubstituiertes, substituiertes oder kondensiertes, partiell ungesättigtes heterocyclisches oder heteroaromatisches Ringsystem ist, auch 0 ist,

$X^{1B}$ — unabhängig voneinander Fluor, Chlor, Brom, Jod, Wasserstoff, $C_1$-$C_{10}$-Alkyl, $C_2$-$C_{10}$-Alkenyl, $C_6$-$C_{20}$-Aryl, Alkylaryl mit 1-10 C-Atomen im Alkylrest und 6-20 C-Atomen im Arylrest, $NR^{15B}R^{16B}$, $OR^{15B}$, $SR^{15B}$, $SO_3R^{15B}$, $OC(O)R^{15B}$, CN, SCN, β-Diketonat, CO, $BF_4$-, $PF_6$-, oder sperrige nichtkoordinierende Anionen bedeuten,

$R^{1B}$ - $R^{16B}$ — unabhängig voneinander Wasserstoff, $C_1$-$C_{20}$-Alkyl, $C_2$-$C_{20}$-Alkenyl, $C_6$-$C_{20}$-Aryl, Alkylaryl mit 1 bis 10 C-Atomen im Alkylrest und 6-20 C-Atomen im Arylrest, $SiR^{17B}_3$, wobei die organischen Reste $R^{1B}$-$R^{16B}$ auch durch Halogene substituiert sein können und je zwei geminale oder vicinale Reste $R^{1B}$-$R^{16B}$ auch zu einem fünf- oder sechsgliedrigen Ring verbunden sein können,

$R^{17B}$ — unabhängig voneinander Wasserstoff, $C_1$-$C_{20}$-Alkyl, $C_2$-$C_{20}$-Alkenyl, $C_6$-$C_{20}$-Aryl, Alkylaryl mit 1 bis 10 C-Atomen im Alkylrest und 6-20 C-Atomen im Arylrest und je zwei geminale Reste $R^{17B}$ auch zu einem fünf- oder sechsgliedrigen Ring verbunden sein können,

$n^{1B}$ — 1, 2 oder 3 und

$m^{1B}$ — 1, 2 oder 3 bedeuten.

Als Übergangsmetall $M^{1B}$ kommt insbesondere Chrom in Betracht.

$Z^{1B}$ ist ein substituiertes Cyclopentadienylsystem, wobei der Rest —$R^B_k$—$A^{1B}$ eine rigide gebundene Donorfunktion trägt. Der Cyclopentadienylring ist über eine $\eta^5$— Bindung an das Übergangsmetall gebunden. Der Donor kann koordinativ gebunden oder nicht koordiniert sein. Bevorzugt ist der Donor intramolekular an das Metallzentrum koordiniert.

$E^{1B}$ bis $E^{5B}$ sind bevorzugt vier Kohlenstoffatome und ein Phosphoratom oder nur Kohlenstoffatome und ganz besonders bevorzugt sind alle $E^{1B}$ bis $E^{5B}$ gleich Kohlenstoff.

$A^{1B}$ kann z.B. zusammen mit der Brücke $R^B$ ein Amin, Ether, Thioether oder Phosphin bilden. $A^{1B}$ kann aber auch ein unsubstituiertes, substituiertes oder kondensiertes, heterocyclisches aromatisches Ringsystem darstellen, welches neben Kohlenstoffringgliedern Heteroatome aus der Gruppe Sauerstoff, Schwefel, Stickstoff und Phosphor enthalten kann. Beispiele für 5-Ring Heteroarylgruppen, welche neben Kohlenstoffatomen ein bis vier Stickstoffatome und/oder ein Schwefeloder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phosphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch $C_1$-$C_{10}$-Alkyl, $C_6$-$C_{10}$-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Bezeichnung und Nummerierung der Heterocyclen wurde aus L.Fieser und M. Fieser, Lehrbuch der organischen Chemie, 3. neubearbeitete Auflage, Verlag Chemie, Weinheim 1957 entnommen. In einer bevorzugten Ausführungsform ist $A^{1B}$ ein unsubstituiertes, substituiertes oder kondensiertes, heteroaromatisches Ringsystem oder $NR^{5B}R^{6B}$. Hierbei sind einfache Systeme bevorzugt, die leicht zugänglich und billig sind und aus der folgenden Gruppe ausgewählt sind:

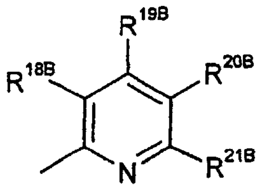
2-Pyridyl

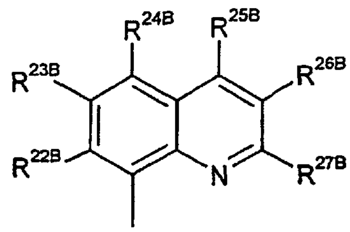
8-Chinolyl

Als Substituenten $R^{18B}$ bis $R^{27B}$ kommen die gleichen Reste, wie für $R^{1B}$-$R^{16B}$ beschrieben und Halogene, wie z.B. Fluor, Chlor oder Brom in Betracht, wobei gegebenenfalls auch zwei vicinale Reste $R^{18B}$ bis $R^{27B}$ zu einem 5- oder 6-gliedrigen Ring verbunden sein können und auch durch Halogene, wie Fluor, Chlor oder Brom substituiert sein können. Bevorzugte Reste $R^{18B}$ bis $R^{27B}$ sind Wasserstoff, Methyl, Ethyl, n-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl, sowie Fluor, Chlor und Brom. Als Si-organische Substituenten kommen besonders Trialkylsilyl-Gruppen mit 1 bis 10 C-Atomen im Alkylrest in Betracht, insbesondere Trimethylsilyl-Gruppen. Ganz besonders bevorzugt ist $A^{1B}$ ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl), 8-(2,3,4,5,6,7-Hexamethylchinolyl. Es ist sehr einfach darstellbar und liefert gleichzeitig sehr gute Aktivitäten.

Die rigide Verbrückung $R^B$ zwischen dem Cyclopentadienylring und der funktionellen Gruppe $A^{1B}$ ist ein organisches Diradikal, bestehend aus Kohlenstoff und/oder Silizium Einheiten mit einer Kettenlänge von 1 bis 3. $R^B$ kann mit $L^1$ oder mit $CR^9$ an $A^{1B}$ gebunden sein. Bevorzugt wegen der einfachen Darstellbarkeit ist die Kombination von $R^B$ gleich CH=CH oder 1,2-Phenylen mit $A^{1B}$ gleich $NR^{5B}R^{6B}$, als auch $R^B$ gleich $CH_2$, $C(CH_3)_2$ oder $Si(CH_3)_2$ und $A^{1B}$ gleich unsubstituiertes oder substituiertes 8-Chinolyl oder unsubstituiertes oder substituiertes 2-Pyridyl. Ganz besonders einfach zugänglich sind auch Systeme ohne Brücke $R^B$, bei denen k gleich 0 ist. Bevorzugtes $A^{1B}$ ist in diesem Falle unsubstituiertes oder substituiertes Chinolyl, insbesondere 8-Chinolyl.

Die Anzahl $n^{1B}$ der Liganden $X^{1B}$ hängt von der Oxidationsstufe des Übergangsmetalles $M^{1B}$ ab. Die Zahl $n^{1B}$ kann somit nicht allgemein angegeben werden. Die Oxidationsstufe der Übergangsmetalle $M^{1B}$ in katalytisch aktiven Komplexen, sind dem Fachmann zumeist bekannt. Chrom, Molybdän und Wolfram liegen sehr wahrscheinlich in der Oxidationsstufe +3 vor. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden. Bevorzugt werden Chromkomplexe in der Oxidationsstufe +3 verwendet.

Der Übergangsmetallkomplex der Formel I kann als monomere, dimere oder trimere Verbindung vorliegen, wobei l dann 1, 2 oder 3 ist. Dabei können z.B. ein oder mehrere Liganden X zwei Metallzentren $M^{1B}$ verbrücken.

Bevorzugte Komplexe sind z.B.

1-(8-Chinolyl)-2-methyl-4-methylcyclopentadienylchrom(III)dichlorid,
1-(8-Chinolyl)-3-isopropyl-5-methylcyclopentadienylchrom(III)dichlorid,
1-(8-Chinolyl)-3-tert.butyl-5-methylcyclopentadienylchrom(III)dichlorid,
1-(8-Chinolyl)-2,3,4,5-tetramethylcyclopentadienylchrom(III)dichlorid,
1-(8-Chinolyl)tetrahydroindenylchrom(III)dichlorid,
1-(8-Chinolyl)indenylchrom(III)dichlorid,
1-(8-Chinolyl)-2-methylindenylchrom(III)dichlorid,
1-(8-Chinolyl)-2-isopropylindenylchrom(III)dichlorid,
1-(8-Chinolyl)-2-ethylindenylchrom(III)dichlorid,
1-(8-Chinolyl)-2-tert.butylindenylchrom(III)dichlorid,
1-(8-Chinolyl)benzindenylchrom(III)dichlorid,
1-(8-Chinolyl)-2-methylbenzindenylchrom(III)dichlorid,
1-(8-(2-Methylchinolyl))-2-methyl-4-methylcyclopentadienylchrom(III)dichlorid,
1-(8-(2-Methylchinolyl))-2,3,4,5-tetramethylcyclopentadienylchrom(III)dichlorid,
1-(8-(2-Methylchinolyl))tetrahydroindenylchrom(III)dichlorid,
1-(8-(2-Methylchinolyl))indenylchrom(III)dichlorid,
1-(8-(2-Methylchinolyl))-2-methylindenylchrom(III)dichlorid,
1-(8-(2-Methylchinolyl))-2-isopropylindenylchrom(III)dichlorid,
1-(8-(2-Methylchinolyl))-2-ethylindenylchrom(III)dichlorid,

1-(8-(2-Methylchinolyl))-2-tert.butylindenylchrom(III)dichlorid,
1-(8-(2-Methylchinolyl))-benzindenylchrom(III)dichlorid oder
1-(8-(2-Methylchinolyl))-2-methylbenzindenylchrom(III)dichlorid.

Die Herstellung funktioneller Cyclopentadienyl-Liganden ist seit langer Zeit bekannt Verschiedene Synthesewege für diese Komplexliganden werden z.B. von M. Enders et. al. in Chem. Ber. (1996), 129, 459-463 oder P. Jutzi und U. Siemeling in J. Orgmet. Chem. (1995), 500, 175-185 beschrieben.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE-A 197 10615).

Erfindungsmäßig geeignete Übergangsmetallverbindungen B) sind außerdem Imidochromverbindungen der allgemeinen Formel (III),

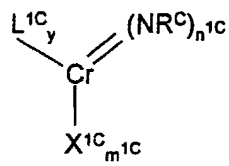

(III)

worin die Variablen folgende Bedeutung haben:

| | |
|---|---|
| $R^C$ | $R^{1C}C=NR^{2C}$, $R^{1C}C=O$, $R^{1C}C=O(OR^{2C})$, $R^{1C}C=S$, $(R^{1C})_2P=O$, $(OR^{1C})_2P=O$, $SO_2R^{1C}$, $R^{1C}R^{2C}C=N$, $NR^{1C}R^{2C}$ oder $BR^{1C}R^{2C}$, $C_1$-$C_{20}$-Alkyl, $C_1$-$C_{20}$-Cycloalkyl, $C_2$-$C_{20}$-Alkenyl, $C_6$-$C_{20}$-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste $R^{1C}$ und $R^{2C}$ auch inerte Substituenten tragen können, |
| $X^{1C}$ | unabhängig voneinander Fluor, Chlor, Brom, Jod, $NR^{3C}R^{4C}$, $NP(R^{3C})_3$, $OR^{3C}$, $OSi(R^{3C})_3$, $SO_3R^{3C}$, OC(O)$R^{3C}$, β-Diketonat, $BF_4^-$, $PF_6^-$, oder sperrige schwach oder nicht koordinierende Anionen, |
| $R^{1C}$ - $R^{4C}$ | unabhängig voneinander $C_1$-$C_{20}$-Alkyl, $C_2$-$C_{20}$-Alkenyl, $C_6$-$C_{20}$-Aryl, Alkylaryl mit 1 bis 10 C-Atomen im Alkylrest und 6-20 C-Atomen im Arylrest, Wasserstoff, falls dieser an ein Kohlenstoffatom gebunden ist, wobei die organischen Reste $R^{1C}$ bis $R^{4C}$ auch inerte Substituenten tragen können, |
| $n^{1C}$ | 1 oder 2, |
| $m^{1C}$ | 1, 2 oder 3 ist, wobei $m^{1C}$ entsprechend der Wertigkeit von Cr den Wert aufweist, bei dem der Metallocenkomplex der allgemeinen Formel (II) ungeladen vorliegt, |
| $L^{1C}$ | ein neutraler Donor und |
| y | 0 bis 3. |

Solche Verbindungen und deren Herstellung sind z.B. in der WO 01/09148 beschrieben.

Weitere geeignete Organoübergangsmetallverbindungen B) sind Übergangsmetallkomplexe mit einem dreizähnigen macrocyclischen Liganden.

Insbesondere sind als Organoübergangsmetallverbindungen B) auch Verbindungen der allgemeinen Formel (IV)

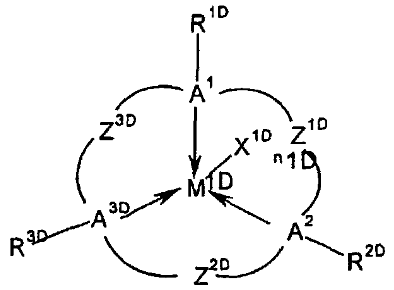

(IV)

geeignet, worin die Variablen folgende Bedeutung haben:

$M^{1D}$ ein Übergangsmetall der Gruppen 3-12 des Periodensystems,

$Z^{1D}$ - $Z^{3D}$ ein Diradikal, ausgewählt aus der folgenden Gruppe

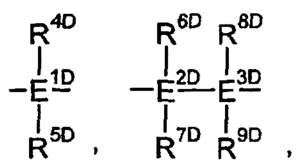

wobei

$E^{1D}$ - $E^{3D}$ Silizium oder Kohlenstoff bedeutet,

$A^{1D}$ - $A^{3D}$ Stickstoff oder Phosphor,

$R^{1D}$ - $R^{9D}$ Wasserstoff, $C_1$-$C_{20}$-Alkyl, 5- bis 7-gliedriges Cycloalkyl, das seinerseits eine $C_6$-$C_{10}$-Arylgruppe als Substituent tragen kann, $C_2$-$C_{20}$-Alkenyl, $C_6$-$C_{20}$-Aryl, Alkylaryl mit 1 bis 10 C-Atomen im Alkylrest und 6-20 C-Atomen im Arylrest, $SiR^{10D}_3$, wobei die organischen Reste $R^{1D}$-$R^{9D}$ durch Halogen(e) und weitere funktionelle Gruppen die bevorzugt Elemente der Gruppe 15 und/oder 16 des Periodensystems der Elemente tragen können, substituiert sein können und je zwei geminale oder vicinale Reste $R^{1D}$-$R^{9D}$ auch zu einem fünf- oder sechsgliedrigen Ring verbunden sein können,

$X^{1D}$ unabhängig voneinander Fluor, Chlor, Brom, Jod, Wasserstoff, $C_1$-$C_{10}$-Alkyl, $C_2$-$C_{10}$-Alkenyl, $C_6$-$C_{20}$-Aryl, Alkylaryl mit 1-10 C-Atomen im Alkylrest und 6-20 C-Atomen im Arylrest, $NR^{10D}_2$, $OR^{10D}$, $SR^{10D}$, $SO_3R^{10D}$, $OC(O)R^{10D}$, CN, SCN, =O, β-Diketonat, $BF_4^-$, $PF_6^-$, oder sperrige nichtkoordinierende Anionen,

$R^{10D}$ unabhängig voneinander Wasserstoff, $C_1$-$C_{20}$-Alkyl, 5- bis 7-gliedriges Cycloalkyl, das seinerseits eine $C_6$-$C_{10}$ Arylgruppe als Substituent tragen kann, $C_2$-$C_{20}$-Alkenyl, $C_6$-$C_{20}$-Aryl, Alkylaryl mit 1 bis 10 C-Atomen im Alkylrest und 6-20 C-Atomen im Arylrest und je zwei Reste $R^{10D}$ auch zu einem fünf- oder sechsgliedrigen Ring verbunden sein können und

$n^{1D}$ eine Zahl von 1 bis 4, bei dem der Metallocenkomplex der allgemeinen Formel (IV) ungeladen vorliegt

Bevorzugte Organoübergangsmetallverbindungen der Formel (IV) sind:

[1,3,5-Tri(methyl)-1,3,5-Triazacyclohexan]chromtrichlorid,
[1,3,5-Tri(ethyl)-1,3,5-Triazacyclohexan]chromtrichlorid,
[1,3,5-Tri(octyl)-1,3,5-Triazacyclohexan]chromtrichlorid,
[1,3,5-Tri(dodecyl)-1,3,5-Triazacyclohexan]chromtrichlorid und
[1,3,5-Tri(benzyl)-1,3,5-Triazacyclohexan]chromtrichlorid,

Als Komponente B) können auch Mischungen verschiedener Organoübergangsmetallverbindungen eingesetzt werden.

Weiterhin enthält der Katalysatorfeststoff als Komponente C) bevorzugt mindestens eine kationenbildende Verbindung.

Geeignete kationenbildende Verbindungen C), die in der Lage sind, durch Reaktion mit der Organoübergangsmetallverbindung B) diese in eine kationische Verbindung zu überführen, sind z.B. Verbindungen vom Typ eines Aluminoxans, einer starken neutralen Lewis-Säure, einer ionischen Verbindung mit lewissaurem Kation oder einer ionischen Verbindung mit Brönsted-Säure als Kation. Im Falle von Metallocenkomplexen als Organoübergangsmetallverbindung B) werden die kationenbildende Verbindungen C) häufig auch als metalloceniumionenbildende Verbindungen bezeichnet

Als Aluminoxane können beispielsweise die in der WO 00/31090, beschriebenen Verbindungen eingesetzt werden. Besonders geeignet sind offenkettige oder cyclische Aluminoxanverbindungen der allgemeinen Formeln (V) oder (VI)

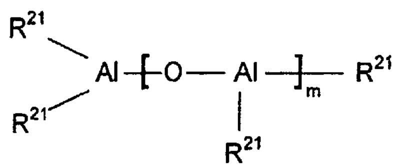

(V)

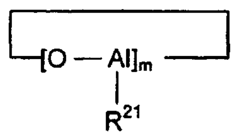

(VI)

wobei

$R^{21}$ eine $C_1$-$C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Aluminoxanverbindungen erfolgt üblicherweise durch Umsetzung einer Lösung von Trialkylaluminium mit Wasser. In der Regel liegen die dabei erhaltenen oligomeren Aluminoxanverbindungen als Gemische unterschiedlich langer, sowohl linearer als auch cyclischer Kettenmoleküle vor, so daß m als Mittelwert anzusehen ist Die Aluminoxanverbindungen können auch im Gemisch mit anderen Metallalkylen, bevorzugt mit Aluminiumalkylen vorliegen.

Weiterhin können als Komponente C) anstelle der Aluminoxanverbindungen der allgemeinen Formeln (V) oder (VI) auch modifizierte Aluminoxane eingesetzt werden, bei denen teilweise die Kohlenwasserstoffreste oder Wasserstoffatome durch Alkoxy-, Aryloxy-, Siloxy- oder Amidreste ersetzt sind.

Es hat sich als vorteilhaft erwiesen, die Organoübergangsmetallverbindung B) und die Aluminoxanverbindungen in solchen Mengen zu verwenden, daß das atomare Verhältnis zwischen Aluminium aus den Aluminoxanverbindungen und dem Übergangsmetall aus der Organoübergangsmetallverbindung B) im Bereich von 10:1 bis 1000:1, bevorzugt von 20:1 bis 500:1 und insbesondere im Bereich von 30:1 bis 400:1, liegt.

Als starke, neutrale Lewissäuren sind Verbindungen der allgemeinen Formel (VII)

$$M^2X^1X^2X^3 \qquad \text{(VII)}$$

bevorzugt, in der

$M^2$ ein Element der 13. Gruppe des Periodensystems der Elemente bedeutet, insbesondere B, Al oder Ga, vorzugsweise B,

$X^1$, $X^2$ und $X^3$ für Wasserstoff, $C_1$—$C_{10}$—Alkyl, $C_6$—$C_{15}$—Aryl, Alkylaryl, Arylalkyl, Halogenalkyl oder Halogenaryl

mit jeweils 1 bis 10 C—Atomen im Alkylrest und 6 bis 20 C—Atome im Arylrest oder Fluor, Chlor, Brom oder Jod stehen, insbesondere für Halogenaryle, vorzugsweise für Pentafluorphenyl.

Weitere Beispiele für starke, neutrale Lewissäuren sind in der WO 00/31090 genannt.
Besonders bevorzugt sind Verbindungen der allgemeinen Formel (VII), in der $X^1$, $X^2$ und $X^3$ gleich sind, vorzugsweise Tris(pentafluorphenyl)boran.
Starke neutrale Lewissäuren, die sich als kationenbildende Verbindungen C) eignen, sind auch die Reaktionsprodukte aus der Umsetzung einer Boronsäure mt zwei Äquivalenten eines Aluminiumtrialkyls oder die Reaktionsprodukte aus der Umsetzung eines Aluminiumtrialkyls mit zwei Äquivalenten einer aciden fluorierten, insbesondere perfluorierten Kohlenstoffverbindung wie Pentafluorphenol oder Bis-(pentafluorphenyl)-borinsäure.
Als ionische Verbindungen mit lewissauren Kationen sind salzartige Verbindungen des Kations der allgemeinen Formel (VIII)

$$[(Y^{a+})Q_1Q_2...Q_z]^{d+} \qquad \text{(VIII)}$$

geeignet, in denen

Y ein Element der 1. bis 16. Gruppe des Periodensystems der Elemente bedeutet,

$Q_1$ bis $Q_z$ für einfach negativ geladene Reste wie $C_1$—$C_{28}$—Alkyl, $C_6$—$C_{15}$—Aryl, Alkylaryl, Arylalkyl, Halogenalkyl, Halogenaryl mit jeweils 6 bis 20 C—Atomen im Aryl— und 1 bis 28 C—Atome im Alkylrest, $C_3$—$C_{10}$—Cycloalkyl, welches gegebenenfalls mit $C_1$—$C_{10}$—Alkylgruppen substituiert sein kann, Halogen, $C_1$—$C_{28}$—Alkoxy, $C_6$—$C_{15}$—Aryloxy, Silyl— oder Mercaptylgruppen

a für ganze Zahlen von 1 bis 6 und

z für ganze Zahlen von 0 bis 5 steht,

d der Differenz a — z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'—Dimethylferrocenylkation zu nennen. Bevorzugt besitzen sie nichtkoordinierende Gegenionen, insbesondere Borverbindungen wie sie auch in der WO 91/09882 genannt werden, bevorzugt Tetrakis(pentafluorophenyl)borat.
Salze mit nicht koordinierenden Anionen können auch durch Zusammengabe einer Bor- oder Aluminiumverbindung, z.B. einem Aluminiumalkyl, mit einer zweiten Verbindung, die durch Reaktion zwei oder mehrere Bor- oder Aluminiumatome verknüpfen kann, z.B. Wasser, und einer dritten Verbindung, die mit der Bor- oder Aluminiumverbindung eine ionisierende ionische Verbindung bildet, z.B. Triphenylchlormethan, hergestellt werden. Zusätzlich kann eine vierte Verbindung, die ebenfalls mit der Bor- oder Aluminiumverbindung reagiert, z.B. Pentafluorphenol, hinzugefügt werden.
Ionische Verbindungen mit Brönsted—Säuren als Kationen haben vorzugsweise ebenfalls nichtkoordinierende Gegenionen. Als Brönstedsäure werden insbesondere protonierte Amin- oder Anilinderivate bevorzugt. Bevorzugte Kationen sind N,N—Dimeihylanilinium, N,N-Dimethylcylohexylammonium und N,N—Dimethylbenzylammonium sowie Derivate der beiden letztgenannten.
Bevorzugte ionische Verbindungen C) sind vor allem N,N-Di-methylaniliniumtetrakis-(pentafluorophenyl)borate, N,N-Dimethyl-cyclohexylammoniumtetrakis(-pentafluorophenyl)borat oder N,N-Dimethylbenzylammoniumtetrakis(pentafluorophenyl)-borat.
Es können auch zwei oder mehrere Boratanionen miteinander verbunden sein, wie in dem Dianion $[(C_6F_5)_2B\text{-}C_6F_4\text{-}B(C_6F_5)_2]^{2-}$, oder das Boratanion kann Ober eine Brücke mit einer geeigneten funktionellen Gruppe auf der Trägeroberfläche gebunden sein.
Weitere geeignete kationenbildende Verbindungen C) sind in der WO 00/31090 aufgelistet.
Die Menge an starken, neutralen Lewissäuren, ionischen Verbindungen mit lewissauren Kationen oder ionischen Verbindungen mit Brönsted—Säuren als Kationen beträgt bevorzugt 0,1 bis 20 Äquivalente, bevorzugt 1 bis 10 Äquivalente, bezogen auf die Organoübergangsmetallverbindung B).
Geeignete kationenbildende Verbindungen C) sind auch Bor—Aluminium—Verbindungen wie Di-[bis(pentafluorphenylboroxy)]methylalan. Entsprechende Bor—Aluminium—Verbindungen sind beispielsweise die in der WO

99/06414 offenbart.

Es können auch Gemische aller zuvor genannten kationenbildenden Verbindungen C) eingesetzt werden. Bevorzugte Mischungen enthalten Aluminoxane, insbesondere Methylaluminoxan, und eine ionische Verbindung, insbesondere eine, die das Tetrakis(pentafluorphenyl)borat-Anion enthält, und/oder eine starke neutrale Lewissäure, insbesondere Tris(pentafluorphenyl)boran.

Vorzugsweise werden sowohl der Organoübergangsmetallverbindung B) als auch die kationenbildende Verbindungen C) in einem Lösungsmittel eingesetzt, wobei aromatische Kohlenwasserstoffe mit 6 bis 20 C—Atomen, insbesondere Xylole und Toluol, bevorzugt sind.

Der Katalysatorfeststoff kann als weitere Komponente D) zusätzlich noch eine Metallverbindung der allgemeinen Formel (IX),

$$M^3(R^{22})_r(R^{23})_s(R^{24})_t \qquad \text{(IX)}$$

in der

| | |
|---|---|
| $M^3$ | ein Alkali—, ein Erdalkalimetall oder ein Metall der 13. Gruppe des Periodensystems, d.h. Bor, Aluminium, Gallium, Indium oder Thallium bedeutet, |
| $R^{22}$ | Wasserstoff, $C_1$—$C_{10}$—Alkyl, $C_6$—$C_{15}$—Aryl, Alkylaryl oder Arylalkyl mit jeweils 1 bis 10 C—Atom im Alkylrest und 6 bis 20 C—Atomen im Arylrest, |
| $R^{23}$ und $R^{24}$ | Wasserstoff, Halogen, $C_1$—$C_{10}$—Alkyl, $C_6$—$C_{15}$—Aryl, Alkylaryl, Arylalkyl oder Alkoxy mit jeweils 1 bis 10 C—Atomen im Alkylrest und 6 bis 20 C— Atomen im Arylrest, |
| r | eine ganze Zahl von 1 bis 3 |

und

| | |
|---|---|
| s und t | ganze Zahlen von 0 bis 2 bedeuten, wobei die Summe r+s+t der Wertigkeit von $M^3$ entspricht, |

enthalten, wobei die Komponente D) nicht identisch mit der Komponente C) ist Es können auch Mischungen verschiedener Metallverbindungen der Formel (IX) eingesetzt werden.

Von den Metallverbindungen der allgemeinen Formel (IX) sind diejenigen bevorzugt, in denen

| | |
|---|---|
| $M^3$ | Lithium, Magnesium oder Aluminium bedeutet und |
| $R^{23}$ und $R^{24}$ | für $C_1$—$C_{10}$—Alkyl stehen. |

Besonders bevorzugte Metallverbindungen der Formel (IX) sind n—Butyllithium, n—Butyl—n—octylmagnesium, n—Butyl—n—heptyl-magnesium, Tri—n—hexyl-aluminium, Tri—iso—butyl—aluminium, Triethylaluminium und Trimethylaluminium und Mischungen davon.

Wenn eine Metallverbindung D) eingesetzt wird, ist sie bevorzugt in einer solchen Menge im Katalysatorfeststoff enthalten, daß das molare Verhältnis von $M^3$ aus Formel (IX) zu Übergangsmetall M aus Organoübergangsmetallverbindung B) von 800:1 bis 1:1, insbesondere von 200:1 bis 2:1, beträgt

In der Regel wird der Katalysatorfeststoff zusammen mit weiterer Metallverbindung D') der allgemeinen Formel (IX), wobei diese sich von der oder den bei der Herstellung des Katalysatorfeststoffs verwendeten Metallverbindungen D) unterscheiden kann, als Bestandteil eines Katalysatorsystems zur Polymerisation oder Copolymerisation von Olefinen eingesetzt. Es ist auch möglich, insbesondere dann, wenn der Katalysatorfeststoff keine Komponente C) enthält, daß das Katalysatorsystem zusätzlich zum Katalysatorfeststoff eine oder mehrere kationenbildenden Verbindungen enthält, die gleich oder verschieden von eventuell im Katalysatorfeststoff enthaltenden kationenbildenden Verbindungen sind.

Prinzipiell wird zur Herstellung der erfindungsgemäßen Katalysatorfeststoffe mindestens eine der Komponenten B) oder C) auf dem Träger durch Physisorption oder auch durch eine chemische Reaktion, das bedeutet eine kovalente Anbindung der Komponenten, mit reaktiven Gruppen der Trägeroberfläche fixiert. Die Reihenfolge der Zusammengabe von Trägerkomponente, Komponente B) und gegebenenfalls Komponente C) ist beliebig. Die Komponenten B) und C) können unabhängig voneinander oder auch gleichzeitig zugegeben werden. Nach den einzelnen

Verfahrensschritten kann der Feststoff mit geeigneten inerten Lösungsmitteln wie aliphatischen oder aromatischen Kohlenwasserstoffen gewaschen werden.

In einer bevorzugten Ausführungsform wird die Organoübergangsmetallverbindung B) in einem geeigneten Lösungsmittel mit der kationenbildenden Verbindung C) in Kontakt gebracht, wobei üblicherweise ein lösliches Reaktionsprodukt, ein Addukt oder ein Gemisch erhalten wird. Die so erhaltene Zubereitung wird dann mit dem gegebenenfalls vorbehandelten calcinierten Hydrotalcit A) in Kontakt gebracht, und das Lösungsmittel und das Lösungsmittel vollständig oder teilweise entfernt. Bevorzugt erhält man dann den Katalysatorfeststoff in Form eines frei fließendes Pulver. Beispiele für die technische Realisierung des obigen Verfahrens sind in WO 96/00243, WO 98/40419 oder WO 00/05277 beschrieben. Einer weitere bevorzugte Ausführungsform ist, zunächst die kationenbildende Verbindung C) auf dem calcinierten Hydrotalcit A) zu erzeugen und anschließend diese geträgerte kationenbildende Verbindung mit der Organoübergangsmetallverbindung B) in Kontakt zu bringen.

Es ist weiterhin möglich, den Katalysatorfeststoff zunächst mit α-Olefinen, bevorzugt linearen $C_2$-$C_{10}$-1-Alkene und insbesondere mit Ethylen oder Propylen vorzupolymerisieren und dann den resultierenden vorpolymerisierten Katalysatorfeststoff bei der eigentlichen Polymerisation zu verwenden. Üblicherweise liegt das Massenverhältnis von bei der Vorpolymerisation eingesetztem Katalysatorfeststoff zu hinzupolymerisiertem Monomer im Bereich von 1: 0,1 bis 1:200.

Weiterhin kann als Additiv während oder nach der Herstellung des geträgerten Katalysatorsystems eine geringe Menge eines Olefins, bevorzugt eines α-Olefins, beispielsweise Vinylcyclohexan, Styrol oder Phenyldimethylvinylsilan, als modifizierende Komponente, ein Antistatikum oder eine geeignete inerte Verbindung wie eine Wachs oder Öl zugesetzt werden. Das molare Verhältnis von Additiven zu Übergangsmetallverbindung B) beträgt dabei üblicherweise von 1:1000 bis 1000:1, bevorzugt von 1:5 bis 20:1.

Die Polymerisation kann in bekannter Weise in Masse, in Suspension, in der Gasphase oder in einem überkritischen Medium in den üblichen, für die Polymerisation von Olefinen verwendeten Reaktoren durchgeführt werden. Sie kann diskontinuierlich oder bevorzugt kontinuierlich in einer oder mehreren Stufen erfolgen. Es kommen Lösungsverfahren, Suspensionsverfahren, gerührte Gasphasenverfahren oder Gasphasenwirbelschichtverfahren in Betracht. Als Lösungsmittel oder Suspensionsmittel können inerte Kohlenwasserstoffe, beispielsweise iso-Butan, oder aber die Monomeren selbst verwendet werden.

Die Polymerisationen kann bei Temperaturen im Bereich von -60 bis 300°C und Drücken im Bereich von 0,5 bis 3000 bar durchgeführt werden. Bevorzugt sind Temperaturen im Bereich von 50 bis 200°C, insbesondere von 60 bis 100°C, und Drücke im Bereich von 5 bis 100 bar insbesondere von 15 bis 70 bar. Die mittleren Verweilzeiten betragen dabei üblicherweise von 0,5 bis 5 Stunden, bevorzugt von 0,5 bis 3 Stunden. Es können bei der Polymerisation auch Molmassenregler, beispielsweise Wasserstoff, oder übliche Zuschlagstoffe wie Antistatika mitverwendet werden.

Die erfindungsgemäßen Katalysatorfeststoffe zeichnen sich dadurch aus, daß sie eine sehr hohe Produktivität bei der Polymerisation von Olefinen aufweisen, Vorteile bei der Aufarbeitung der Polymerisate nach der Polymerisation bieten, und zu deutlich weniger Problemen im Hinblick auf Katalysatorrückstände im Polymerisat führen. Die mit dem erfindungsgemäßen Katalysatorsystem hergestellten Polymerisate eigenen sich bevorzugt für solche Anwendungen, die eine hohe Produktreinheit erfordern.

Beispiele

Zur Charakterisierung der Proben wurden folgende Prüfungen durchgeführt:

Bestimmung des Gehalts der Elemente Magnesium und Aluminium:

Der Gehalt der Elemente Magnesium und Aluminium wurde an den in einem Gemisch aus konzentrierter Salpetersäure, Phosphorsäure und Schwefelsäure aufgeschlossenen Proben mit einem induktiv gekoppelten Plasma-Atom-Emissions-(ICP-AES) Spektrometer der Fa. Spectro, Kleve, Deutschland, anhand der Spektrallinien bei 277,982 nm für Magnesium und bei 309,271 nm für Aluminium bestimmt

Bestimmung der spezifischen Oberfläche:

Durch Stickstoff—Adsorption nach DIN 66131

Bestimmung des Porenvolumens:

Durch Quecksilber—Porosimetrie nach DIN 66133

Bestimmung von D10, D50 und D90:

Es wurde in Dispersion in Isopropanol durch Laserbeugung mit einem Mastersizer X der Firma Malvern, Großbritannien die Teilchengrößenverteilung der Partikel gemessen. Unter den Größen D10, D50 und D90 sind die volumenbezogenen Perzentilwerte der Durchmesser zu verstehen. Der Wert D50 ist gleichzeitig der Median der Teilchengrößenverteilung.

Bestimmung des Glühverlusts:

Der Glühverlust ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.

Röntgend iffraktometrie:

Die Röntgendiffraktometrie wurde mittels eines Pulverdiffraktometers D 5000 der Firma Siemens in Reflexion mit Cu-K$\alpha$-Strahlung durchgeführt.

Bestimmung der OH-Zahl:

Ca. 20 g des zu untersuchenden Feststoffs werden in 250 ml Heptan suspendiert und die Suspension wird unter Rühren auf 0°C gekühlt. Bei konstanter Temperatur werden 40 ml einer 2 M Lösung von Triethylalumium in Heptan kontinuierlich Ober 30 min zugegeben. Das sich dabei bildende Ethan wird aufgefangen und volumetrisch bestimmt Die OH-Zahl ist die molare Menge an gebildetem Ethan/Masse an eingesetztem Träger.

Bestimmung der Restfeuchte:

Die Restfeuchte ist der Gehalt an flüchtigen Anteilen, der sich bei einer Messung unter Inertgasatmosphäre mit einem Mettler LJ 16 Moister Analyzer der Firma Mettler—Toledo, Greifensee, Schweiz ergibt

Bestimmung des Druckanstiegs bei der Schmelzefiltration:

Die Bestimmung des Druckanstiegs bei der Schmelzefiltration erfolgte durch Extrusion des Polypropylens in einem Standard-Laborextruder (3-Zonenschnecke) bei 265°C durch eine Metallfilterronde mit Stützgewebe mit einer Maschenweite von 5 mm bei einer Durchsatzrate von 2 kg/h. Der Druckanstieg wurde dabei für 1 Stunde bei gleicher Polypropylen-Durchsatzrate über die Zeit aufgenommen.

Bestimmung der Korngrößenverteilung des Polypropylengrieses:

Die Bestimmung der Komgrößenverteilung des Polypropylengrieses erfolgte durch Siebanalyse.

Bestimmung des Schmelze-Fließrate (MFR):

nach ISO—Norm 1133, bei 230°C und unter einem Gewicht von 2,16 kg.

Bestimmung der Schmelztemperatur:

Die Schmelztemperatur $T_m$ wurde durch DSC-Messung nach ISO—Norm 3146 mit einem ersten Aufheizen mit einer Aufheizrate von 20°C pro Minute bis 200°C, einer dynamische Kristallisation mit einer Kühlrate von 20°C pro Minute bis 25°C und einem zweiten Aufheizen mit einer Aufheizrate von 20°C pro Minute wiederum bis 200°C ermittelt Die Schmelztemperatur ist dann die Temperatur, bei der die beim zweiten Aufheizen gemessene Kurve der Enthalpie gegen die Temperatur das Maximum aufweist.

Bestimmung der Breite der Molmassenverteilung (Q-Wert):

Es wurde eine Gelpermeationschromatographie (GPC) bei 145°C in 1,2,4-Trichlorbenzol durchgeführt, wobei eine GPC—Apparatur 150C der Fa. Waters verwendet wurde. Die Auswertung der Daten erfolgte mit der Software Win-GPC der Fa. HS—Entwicklungsgesellschaft für wissenschaftliche Hard— und Software mbH, Ober—Hilbersheim. Die Kalibrierung der Säulen erfolgte mittels Polypropylenstandards mit Molmassen von 100 bis $10^7$ g/mol. Es wurden Massenmittel ($M_w$) und Zahlenmittel ($M_n$) der Molmassen der Polymerisate bestimmt. Der Q-Wert ist das Verhältnis von Massenmittel ($M_w$) zu Zahlenmittel ($M_n$).

Bestimmung des xylollöslichen Anteils:

Zur Ermittlung der xylollöslichen Anteile wurden 5 g Propylenpolymerisat in 500 ml destilliertes Xylol (Isomerengemisch), das zuvor auf 100°C erhitzt worden war, gegeben. Anschließend wurde die Mischung auf den Siedepunkt des Xylols erhitzt und 60 min bei dieser Temperatur gehalten. Daraufhin wurde innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert. Von dem Filtrat wurden exakt 100 ml abgefüllt und das Lösungsmittel am Rotationsverdampfer entfernt. Der verbleibende Rückstand wurde für 2 h bei 80°C/ 250 mbar getrocknet und nach dem Erkalten ausgewogen.

Der xylollösliche Anteil wurde dann nach der Formel

$$X_L = \frac{g \times 500 \times 100}{G \times V}$$

mit

$X_L$ = xylollöslicher Anteil in %,
g = gefundene Menge in g,
G = Produkteinwaage in g und
V = Volumen der eingesetzten Filtratmenge in ml
berechnet

Beispiel 1

a) Trägervorbehandlung

Als Trägermaterial wurde Puralox MG 61 der Fa. Condea Chemie GmbH eingesetzt. Hierbei handelt es sich um für 3 Stunden bei 550°C in einem Drehrohrofen calciniertes Aluminium-Magnesium— Mischoxid mit einem MgO— -Gehalt von 61 Gew.— %, einer spezifischer Oberfläche von 156 $m^2$/g, einem Porenvolumen von 1,4 ml/g, und einer Partikelgrößenverteilung, die charakterisiert ist durch D10/D50/D90 von 21,1/44,0/71,0 µm. Am Ausgangsmaterial wurde ein Glühverlust von 11,6 Gew.— % bestimmt. Fig. 1 zeigt ein Röntgendiffraktogramm des Aluminium— Magnesium— Mischoxids.

100 g Puralox MG 61 wurden zunächst über 30 Stunden bei 180°C und 1 mbar getrocknet und anschließend unter Stickstoffatmosphäre aufbewahrt. Der Glühverlust reduzierte sich hierdurch auf 7,1 Gew.-%.

b) Metallocen/MAO-Beladung

153,2 mg (206,7 µmol) rac— Dimethylsilandiylbis(2-methyl-4-(para-tert.butyl-phenyl)-indenyl)-zirkoniumdichlorid, dessen Gehalt an meso-Isomer unterhalb der NMR-spektroskopischen Nachweisgrenze von 5 % lag, wurden bei Raumtemperatur in 9,1 ml einer 4,75 M Lösung von MAO in Toluol der Firma Albemarle (entsprechend 43,3 mmol Al) gelöst Die Lösung wurde mit 7,2 ml Toluol verdünnt und 1 h unter Lichtausschluß bei 25°C gerührt. Diese Lösung wurde portionsweise unter Rühren zu 10,05 g des in Beispiel 1 a) vorbehandelten calcinierten Aluminium— Magnesium— Mischoxids gegeben und der Ansatz nach beendeter Zugabe 10 min gerührt. Anschließend wurde innerhalb von 4 h bei 40°C und $10^{-3}$ mbar getrocknet.

Es wurden 12,64 g eines frei fließenden, rosafarbenen Pulvers isoliert (Restfeuchte 2,0 Gew.— %).

c) Polymerisation

Ein trockener 16 l-Reaktor, der zunächst mit Stickstoff und anschließend mit Propylen gespült worden war, wurde mit 10 l flüssigem Propen gefüllt. Zusätzlich wurden 5 $Ndm^3$ Wasserstoff eindosiert. Weiterhin wurden 8 ml einer 20 Gew.-%igen Lösung von Triethylaluminium in einem hochsiedenden entaromatisierten Kohlenwasserstoff— Gemisch der Fa. Witco zugesetzt und der Ansatz 15 min bei 30°C gerührt Anschließend wurde eine Suspension von 600 mg des in Beispiel 1 b) hergestellten Katalysatorfeststoffs in 20 ml eines hochsiedenden entaromatisierten Kohlenwasserstoff— Gemischs in den Reaktor gegeben, auf die Polymerisationstemperatur von 65°C aufgeheizt und 1 h bei dieser Temperatur gehalten. Die Polymerisation wurde durch Ablassen der Monomere gestoppt und das erhaltene Polymer im Vakuum getrocknet. Es wurde eine Ausbeute von 2930 g Polypropylen, entsprechend einer Produktivität von 4890 g Polypropylen/g Katalysatorfeststoff erhalten.

100 g des Polymerpulvers wurden mit der Analysensiebmaschine Haver EML 200 digital T der Fa. Haver & Boecker, Oelde, Deutschland, fraktioniert. 10 mg wurden unterhalb des Siebbodens mit einer Maschenweite von 100 µm isoliert, auf einem Schmelztisch aufgeschmolzen und mit einem Lichtmikroskop untersucht. Auf einer Fläche von 300 µm x 1000 µm wurden durchschnittlich fünf unaufgeschmolzene Partikel mit einem Durchmesser zwischen 5 und 20 µm beobachtet.

Vergleichsbeispiel A

a) Trägerdesaktivierung

Als Trägermaterial wurde Sylopol 948, ein Kieselgel der Firma Grace eingesetzt. Das Kieselgel wurde 8 h bei 700°C calciniert.

b) Metallocen/MAO-Beladung

Beispiel 1 b) wurde wiederholt, jedoch wurden 154,7 mg (208,8 µmol) des Metallocens, das in 9,3 ml der 4,75 M MAO—Lösung (entsprechend 43,8 mmol Al) gelöst und mit 11,1 ml Toluol verdünnt worden war, mit 10,14 g des Trägermaterials aus Vergleichsbeispiel A a) zusammengegeben.

c) Polymerisation

Beispiel 1 c) wurde wiederholt, jedoch wurden 900 mg des in Vergleichsbeispiel A b) hergestellten Katalysatorfeststoffs eingesetzt. Es wurden 2780 g Polypropylen, entsprechend einer Produktivität von 3090 g Polypropylen/g Katalysatorfeststoff erhalten.

100 g des Polymerpulvers wurden wie in Beispiel 1 c) gesiebt und untersucht Auf einer Fläche von 300 µm x 1000 µm wurden durchschnittlich 20 unaufgeschmolzene Partikel mit einem Durchmesser zwischen 5 und 50 µm beobachtet.

Beispiel 2

a) Trägervorbehandlung

5000 g Puralox MG 61 wurden 12 Stunden im Stickstoffstrom bei 300°C getrocknet und anschließend unter Stickstoffatmosphäre aufbewahrt. Der Glühverlust betrug anschließend 7,5 Gew.—%.

b) Metallocen/MAO-Beladung

3000 g des in Beispiel 2 a) vorbehandelten Puralox MG 61 mit D50 = 44 µm und einem Porenvolumen von 1,4 ml/g wurden unter Stickstoff in einem Kegelschneckentrockner (Fassungsvermögen 60 l) vorgelegt Parallel dazu wurden 40 g rac-Dimethylsilandiylbis—2—methyl—indenylzirkoniumdichlorid in 3000 g einer 4,75 M Lösung von MAO in Toluol der Firma Albemarle bei Raumtemperatur gelöst Anschließend wurde die Lösung mit 2024 ml Toluol auf ein Gesamtvolumen von 5250 ml verdünnt. Das Verhältnis von Gesamtvolumen der Lösung zum Porenvolumen des Trägermaterials betrug 1,25.

Die so vorbereitete Metallocen-MAO-Lösung wurde bei Raumtemperatur über eine Düse auf das Trägermaterial bei gleichzeitigem Rühren gesprüht (Dosierrate 5 l/h). Nach beendeter Zugabe wurde noch 20 Minuten weiter gerührt und anschließend bei 50°C Manteltemperatur im Vakuum das Lösemittel entfernt.

Es wurden 4150 g eines frei fließenden, rosafarbenen Pulvers erhalten.

Die Belegung des Trägermaterials betrug 0,01 g Metallocen/g Träger und 0,3 g MAO/g Träger.

Der Katalysator hatte eine Restfeuchte von 5,3 Gew—%.

c) Polymerisation

Der im Beispiel 2 b) hergestellte Metallocen-Trägerkatalysator wurde für eine kontinuierliche Propylen-Homopolymerisation in einem vertikal durchmischten 800 l Gasphasenreaktor eingesetzt Der Reaktor enthielt ein Bett aus feinteiligem Polypropylenpulver und wurde bei einem konstanten Ausstoß von ca. 100 kg/h betrieben. Der Reaktordruck betrug 24 bar und die Reaktortemperatur 63°C. Pro Stunde wurden 300 mmol Triisobutylaluminium als 1 M Lösung in Heptan zugegeben. Es wurde ein Polymergries mit einer Schüttdichte von 490 g/l, einer mittleren Partikelgröße von 895 µm und 2,3 Gew.—% Partikel mit einem Durchmesser > 2 mm erhalten. Die Katalysatorproduktivität

betrug 8300 g PP/g Katalysatorfeststoff.

Der Schmelzefiltrationstest mit dem erhaltenen Polypropylen ergab einen Druckanstieg von 8 bar/kg Polypropylen.

Vergleichsbeispiel B

a) Trägervorbehandlung

Als Trägermaterial wurde Sylopol 948, ein Kieselgel der Firma Grace mit D50 = 50 µm, einem Porenvolumen von 1,6 ml/g und einem Glühverlust von 8,4 Gew.—% eingesetzt. Das Kieselgel wurde 12 h bei 300°C im Stickstoffstrom getrocknet Nach der Behandlung reduzierte sich der Glühverlust auf 3,0 Gew.—%.

b) Metallocen/MAO-Beladung

Beispiel 2 b) wurde wiederholt, jedoch wurden die Metallocen—MAO—Lösung vor dem Aufsprühen auf das in Vergleichsbeispiel B a) vorbehandelte Trägermaterial mit 2774 ml Toluol auf ein Gesamtvolumen von 6000 ml verdünnt. Das Verhältnis des Gesamtvolumens der Lösung zum Porenvolumen des Trägermaterials betrug 1,25.

Es wurden 4140 g eines frei fließenden, rosafarbenen Pulvers erhalten.

Die Belegung des Trägermaterials betrug 0,01 g Metallocen/g Träger und 0,3 g MAO/g Träger.

Der Katalysator hatte eine Restfeuchte von 5,0 Gew—%.

c) Polymerisation

Beispiel 2 c) wurde wiederholt, jedoch wurde der in Vergleichsbeispiel B b) hergestellte Katalysatorfeststoff eingesetzt Es wurde ein Polymergries mit einer Schüttdichte von 470 g/l, einer mittleren Partikelgröße von 930 µm und 2,8 Gew.—% Partikel mit einem Durchmesser > 2 mm erhalten. Die Katalysatorproduktivität betrug 6100 g PP/g Katalysatorfeststoff.

Der Schmelzefiltrationstest mit dem erhaltenen Polypropylen ergab einen Druckanstieg von 120 bar/kg Polypropylen.

Beispiel 3

a) Trägervorbehandlung

20 g Puralox MG 61 der Fa. Condea Chemie GmbH wurden 8 h bei 180°C und 1 mbar getrocknet, in 100 ml Toluol (abs.) suspendiert und innerhalb von 30 Minuten unter Rühren mit 17,6 ml einer 4,75 M Lösung von MAO in Toluol der Firma Albemarle (entsprechend 79,3 mmol Al) versetzt. Nach beendeter Zugabe wurde die Suspension 3 h bei Raumtemperatur gerührt und anschließend filtriert. Der Filterkuchen wurde im Stickstoffstrom bis zur Rieselfähigkeit getrocknet Ausbeute: 44,3 g

b) Metallocen/MAO-Beladung

280 mg Dimethylsilandiylbis(2-methyl-4,5-benzoindenyl)zirkondichlorid (0,48 mmol) wurden mit 4 ml einer 4,75 M Lösung von MAO in Toluol (19,0 mmol) der Firma Albemarle und mit 33,2 ml Toluol (abs.) vermischt und eine Stunde bei Raumtemperatur gerührt. 17,7 g des desaktivierten Trägers aus Beispiel 3 a) (entsprechend 8 g Puralox MG 61) wurden als Säule mit einer möglichst glatten Oberfläche auf einer Fritte vorgelegt und mit der Metallocen/MAO-Lösung überschichtet Man ließ die Lösung drucklos durch die Säule laufen bis die Flüssigkeitsoberfläche die Oberfläche der Säule berührte. Der feuchte Filterkuchen wurde mit einem Spatel aufgerührt und 3 h bei Raumtemperatur stehen gelassen. Anschließend wurde die Restlösung abgedrückt und der Katalysator bis zur Rieselfähigkeit im Stickstoffstrom getrocknet.

Ausbeute: 11,5 g orangefarbenes Pulver (Restfeuchte = 3,5 Gew.—%)

c) Polymerisation

In einem trockenen, 100 g Polymergries enthaltenden, mit Stickstoff gespülten 10-l-Autoklaven wurde ein Gemisch aus 18 mmol Trisobutylaluminium (9 ml 2M Lösung in Heptan) und 2 mmol Diisobutylaluminiumhydrid (1 ml 2M Lösung in Heptan)) vorgelegt. 408 mg des in Beispiel 3 b) hergestellten Katalysatorfeststoffs wurden im Stickstoffgegenstrom über den Einfüllstutzen zudosiert und der Autoklav mit 7 l flüssigem Propen befüllt. Anschließend wurde

der Autoklav auf 65°C aufgeheizt und die Polymerisation bei dieser Temperatur durchgeführt. Nach 90 Minuten wurde die Polymerisation durch Ablassen des verbliebenen Propens abgebrochen und das Produkt durch das Bodenventil ausgetragen.

Es wurden 1980 g Polypropylengries mit guter Morphologie erhalten. Die Korngrößenverteilung des Grieses war:

| | |
|---|---|
| < 0,1 mm | 0,1 Gew.—% |
| > 0,1 mm — < 0,2 mm | 0,5 Gew.—% |
| > 0,2 mm — < 0,3 mm | 3,7 Gew.—% |
| > 0,3 mm — < 0,5 mm | 43,6 Gew.—% |
| > 0,5 mm — < 1,0 mm | 50,7 Gew.—% |
| > 1,0 mm — < 2,0 mm | 1,5 Gew.—% |

Die Produktivität betrug 5030 g PP/g Katalysatorfeststoff.

Das erhaltenen Polypropylen wies eine Schmelze-Fließrate (MFR) von 6,5 g/10 min, eine Schmelztemperatur $T_m$ von 146,1°C, einen Q-Wert von 2,0 und einen xylollöslichen Anteil von 0,2 Gew.—% auf.

Vergleichsbeispiel C

a) Trägervorbehandlung

30 g Sylopol 948, ein Kieselgel der Firma Grace wurden 8 h bei 180°C und 1 mbar getrocknet, in 150 ml Toluol (abs.) suspendiert und innerhalb von 30 Minuten unter Rühren mit 26,4 ml einer 4,75 M Lösung von MAO in Toluol (124 mmol) der Firma Albemarle versetzt. Nach beendeter Zugabe wurde die Suspension 3 h bei Raumtemperatur gerührt und anschließend filtriert. Der Filterkuchen wurde im Stickstoffstrom bis zur Rieselfähigkeit getrocknet. Ausbeute: 68,4 g

b) Metallocen/MAO-Beladung

Beispiel 3 b) wurde wiederholt, jedoch wurden 18,2 g (entsprechend 8 g Sylopol 948) des in Vergleichsbeispiel C a) hergestellten desaktivierten Trägermaterials eingesetzt. Ausbeute: 13,8 g orangefarbenes Pulver (Restfeuchte = 16,9 Gew.—%)

c) Polymerisation

Beispiel 3 c) wurde wiederholt, jedoch wurden 379 mg des in Vergleichsbeispiel C b) hergestellten Katalysatorfeststoffs eingesetzt.

Es wurden 830 g Polypropylengries mit guter Morphologie erhalten. Die Komgrößenverteilung des Polypropylengrieses war:

| | |
|---|---|
| < 0,1 mm | 0,2 Gew.—% |
| > 0,1 mm — < 0,2 mm | 0,4 Gew.—% |
| > 0,2 mm — < 0,3 mm | 2,3 Gew.—% |
| > 0,3 mm — < 0,5 mm | 17,0 Gew.—% |
| > 0,5 mm — < 1,0 mm | 73,8 Gew.—% |
| > 1,0 mm — < 2,0 mm | 6,3 Gew.—% |

Die Produktivität betrug 2640 g PP/g Katalysatorfeststoff.

Das erhaltenen Polypropylen wies eine Schmelze-Fließrate (MFR) von 6,2 g/10 min, eine Schmelztemperatur $T_m$von 144,8°C, einen Q—Wert von 1,7 und einen xylollöslichen Anteil von 0,2 Gew.—% auf.

Beispiel 4

a) Trägervorbehandlung

100 g Puralox MG 61 der Fa. Condea Chemie GmbH wurden 6 h bei 150°C ausgeheizt. Der Träger enthielt anschließend eine OH—Zahl von 0,19 mmol/g Träger.

b) Metallocen/MAO-Beladung

287,1 mg $(nBu\text{-}Cp)_2ZrCl_2$ (Fa. Witco, Eurecen 5031) wurden in 4,1 ml Toluol suspendiert, mit 18,6 ml einer 4,75 M Lösung von MAO in Toluol der Firma Albemarle versetzt und 45 min gerührt. Die Metallocen/MAO-LÖsung wurde innerhalb von 10 min zu 14,2 g des desaktivierten Trägers aus Beispiel 4 a) gegeben und 60 min nachgerührt Danach wurde der Katalysator bei Raumtemperatur bei $10^{-3}$ mbar getrocknet. Es wurden 20,2 g eines hellgelb-beigen Feststoffs erhalten.

c) Polymerisation

In einen 1I-Autoklaven, der mit Argon inertisiert worden war, wurden 400 ml Isobutan und 3 ml einer 20 gew.-%igen Butyl-Octyl-Magnesium-Lösung in Heptan (entsprechend 150 mg Butyl-Octyl-Magnesium) gegeben und schließlich 24,0 mg des in Beispiel 4 b) erhaltenen Katalysatorfeststoffs zudosiert. Es wurde 90 min bei 40 bar Ethylendruck und 70°C polymerisiert. Die Polymerisation wurde durch Ablassen des Drucks abgebrochen und das Produkt durch das Bodenventil ausgetragen. Es wurden 400 g Polyethylen erhalten.
Produktivität 16670 g PE/g Katalysatorfeststoff

Vergleichsbeispiel D

a) Trägervorbehandlung

100 g ES 70 X, ein sprühgetrocknetes Kieselgel der Fa. Crosfield wurden 6 h bei 600°C ausgeheizt Der Träger enthielt anschließend eine OH—Zahl von 0,15 mmol/g Träger.

b) Metallocen/MAO-Beladung

Beispiel 4 b) wurde wiederholt, jedoch wurden 12,8 g des in Vergleichsbeispiel D a) hergestellten desaktivierten Trägermaterials, das annähernd die gleiche OH—Zahl wie der in Beispiel 4 b) eingesetzte Träger aufwies, 258,8 mg des Metallocens und 16,7 ml der 4,75 M MAO—Lösung eingesetzt. Es wurden 18,0 g eines hellgelb-beigen Feststoffs erhalten.

c) Polymerisation

Beispiel 4 c) wurde wiederholt, jedoch wurden 24,8 mg des in Vergleichsbeispiel D b) hergestellten Katalysatorfeststoffs eingesetzt. Es wurden 300 g Polyethylen erhalten.
Produktivität 12100 g PE/g Katalysatorfeststoff

Beispiel 5

Polymerisation

Ein trockener 5 I-Reaktor, der zunächst mit Stickstoff und anschließend mit Propylen gespült worden war, wurde mit 3 I flüssigem Propen gefüllt. Zusätzlich wurden 5 $Ndm^3$ Wasserstoff eindosiert Weiterhin wurden 23 ml einer 20 Gew.—%igen Lösung von Triethylaluminium in einem hochsiedenden entaromatisierten Kohlenwasserstoff—Gemisch der Fa. Witco zugesetzt und der Ansatz 15 min bei 30°C gerührt Anschließend wurde eine Suspension von 250 mg des in Beispiel 1 b) hergestellten Katalysatorfeststoffs in 20 ml eines hochsiedenden entaromatisierten Kohlenwasserstoff—Gemischs in den Reaktor gegeben, auf die Polymerisationstemperatur von 65°C aufgeheizt und 1 h bei dieser Temperatur gehalten. Die Polymerisation wurde durch Ablassen der Monomere gestoppt und das erhaltene Polymer im Vakuum getrocknet. Es wurde eine Ausbeute von 887 g Polypropylen, entsprechend einer Produktivität von 4890 g Polypropylen/g Katalysatorfeststoff erhalten. Das erhaltene Polypropylen hatte eine Schmelztemperatur $T_m$ von 151,7°C, eine mittlere Molmasse $M_w$ von 493 000 g/mol und einen Q-Wert von 3,0. Der Gehalt an ataktischem

Polypropylen betrug 0,11 %. Im Reaktor konnten keine Beläge festgestellt werden.

Beispiel 6

a) Trägervorbehandlung

Es wurde ein Aluminium—Magnesium—Mischoxid eingesetzt, das aus dem gleichen Ausgangsmaterial wie das Aluminium—Magnesium—Mischoxid des Beispiels 1 a) erhalten wurde. Die Calcinierung erfolgte ebenfalls wie in Beispiel 1 a), jedoch wurde 3 h bei 250°C calciniert. Das erhaltene calcinierte Aluminium—Magnesium—Mischoxid hatte eine spezifische Oberfläche von 81 $m^2$/g und ein Porenvolumen von 1,14 ml/g. Der Glühverlust betrugt 38,1 Gew.-%. Die Fraktionierung des calcinierten Aluminium—Magnesium—Mischoxids über einen Siebturm ergab die folgende Partikelgrößenverteilung: <25 µm 28 Gew.-%, <45 µm 47,8 Gew.-% und <90 µm 88,4 Gew.-%. Fig. 2 zeigt ein Röntgendiffraktogramm des teil-calcinierten Aluminium—Magnesium—Mischoxids.

100 g des Aluminium—Magnesium—Mischoxids wurden wie in Beispiel 1 a) getrocknet und anschließend unter Stickstoffatmosphäre aufbewahrt. Der Glühverlust reduzierte sich hierdurch auf 33,6 Gew.-%.

b) Metallocen/MAO-Beladung

Die Beladung des Trägers erfolgte wie in Beispiel 1 b), es wurde jedoch mit 5,9 ml Toluol verdünnt.

Es wurden 12,7 g eines frei fließenden, rosafarbenen Pulvers isoliert (Restfeuchte 2,3 Gew.-%).

c) Polymerisation

Beispiel 5 wurde wiederholt. Es wurde eine Produktivität von 4,36 kg Polypropylen/g Katalysatorfeststoff erhalten.

Das erhaltene Polypropylen hatte eine Schmelztemperatur $T_m$ von 151,7°C, eine mittlere Molmasse $M_w$ von 507 000 g/mol und einen Q-Wert von 4,1. Der Gehalt an ataktischem Polypropylen betrug 0,24 %, Im Reaktor konnten keine Beläge festgestellt werden.

Beispiel 7

Es wurde verfahren wie im Beispiel 6, jedoch wurde das Aluminium—Magnesium—Mischoxid 3 h bei 800°C calciniert. Das Aluminium—Magnesium—Mischoxid hatte eine spezifische Oberfläche von 138 $m^2$/g und ein Porenvolumen von 1,59 ml/g. Der Glühverlust betrugt 3,74 Gew.-%. Die Partikelgrößenverteilung, bestimmt durch Fraktionierung über einen Siebturm, war: <25 µm 27,7 Gew.-%, <45 µm 48,8 Gew.-% und <90 µm 90,3 Gew.-%. Fig. 3 zeigt ein Röntgendiffraktogramm Aluminium—Magnesium—Mischoxids.

100 g des Aluminium—Magnesium—Mischoxids wurden wie in Beispiel 1 a) getrocknet und anschließend unter Stickstoffatmosphäre aufbewahrt.. Der Glühveriust reduzierte sich hierdurch auf 1,47 Gew.—%.

b) Metallocen/MAO-Beladung

Die Beladung des Trägers erfolgte wie in Beispiel 1 b), es wurde jedoch mit 14,9 ml Toluol verdünnt

Es wurden 12,5 g eines frei fließenden, rosafarbenen Pulvers isoliert (Restfeuchte 0,97 Gew.-%).

c) Polymerisation

Beispiel 5 wurde wiederholt Es wurde eine Produktivität von 4,16 kg Polypropylen/g Katalysatorfeststoff erhalten.

Das erhaltene Polypropylen hatte eine Schmelztemperatur $T_m$ von 155,1°C, eine mittlere Molmasse $M_w$ von 247 000 g/mol und einen Q-Wert von 2,9. Der Gehalt an ataktischem Polypropylen betrug 0,3 %. Im Reaktor konnten keine Beläge festgestellt werden.

Vergleichsbeispiel E

Es wurde verfahren wie im Beispiel 6, jedoch wurde das nicht calcinierte Ausgangsmaterial eingesetzt. Es hatte eine spezifische Oberfläche von 236 $m^2$/g und ein Porenvolumen von 1,12 ml/g. Der Glühverlust betrugt 45,6 Gew.-%. Die Partikelgrößenverteilung, bestimmt durch Fraktionierung über einen Siebturm, war: <25 µm 53,4 Gew.-%, <45 µm 96,8 Gew.-% und <90 µm 100 Gew.-%. Fig. 4 zeigt ein Röntgendiffraktogramm des nicht calcinierten

Ausgangsmaterials.

b) Metallocen/MAO-Beladung

Die Beladung des Trägers erfolgte wie in Beispiel 1 b), es wurde jedoch mit 2,8 ml Toluol verdünnt und es wurden 154,1 mg des Metallocens eingesetzt.

Es wurden 12,8 g eines frei fließenden, rosafarbenen Pulvers isoliert (Restfeuchte 2,02 Gew.-%).

c) Polymerisation

Beispiel 5 wurde wiederholt. Es wurde eine Produktivität von 2,04 kg Polypropylen/g Katalysatorfeststoff erhalten.

Das erhaltene Polypropylen hatte eine Schmelztemperatur $T_m$ von 152,1°C, eine mittlere Molmasse $M_w$ von 285 000 g/mol und einen Q-Wert von 4,4. Der Gehalt an ataktischem Polypropylen betrug 0,4,2 %. Im Reaktor konnte eine geringe Belagsbildung festgestellt werden.

Beispiel 8

a) Trägervorbehandlung

5 g Puralox MG 61 wurden 8 Stunden bei 180°C und 1 mbar getrocknet und anschließend unter Stickstoffatmosphäre aufbewahrt.

b) Metallocen/MAO—Beladung

130,3 mg Dichloro—[1—(8-chinolyl)—2,3,4,5—tetramethylcyclopentadienyl]chrom (350 mmol) wurden in 9,2 ml einer 4,75 M Lösung von MAO in Toluol der Firma Albemarle (entspr. 43,75 mmol Al) gelöst und 15 min bei Raumtemperatur gerührt (Cr:Al = 1:125).

Diese Lösung wurde unter Rühren direkt auf das in Beispiel 4 a) vorbehandelte calcinierte Aluminium-Magnesium-Mischoxid gegeben und der Ansatz nach beendeter Zugabe eine Stunde gerührt Das so erhaltene Reaktionsgemisch wurde zwei Stunden stehen gelassen und anschließend unter Vakuum bei Raumtemperatur getrocknet. Es wurde ein hellviolettes Pulver erhalten.

c) Polymerisation

In einen 1l-Autoklaven, der mit Argon inertisiert worden war, wurden 400 ml Isobutan und 80 mg Butyl-Lithium (als 0,1 M Lösung in Heptan) gegeben und schließlich 342 mg des in Beispiel 4 b) erhaltenen Katalysatorfeststoffs zudosiert. Es wurde 60 min bei 40 bar Ethylendruck und 70°C polymerisiert. Die Polymerisation wurde durch Ablassen des Drucks abgebrochen, das Produkt durch das Bodenventil ausgetragen und mit methanolischer HCL-Lösung (15 ml konzentrierte Salzsäure in 50 ml Methanol) versetzt. Anschließend wurden 250 ml Methanol zugegeben, das entstandene weiße Polymer abfiltriert, mit Methanol gewaschen und bei 70°C getrocknet.
Es wurden 400 g Polyethylen erhalten.
Produktivität: 1200 g PE/g Katalysatorfeststoff

## Patentansprüche

1. Katalysatorfeststoff zur Olefinpolymerisation, enthaltend

    A) mindestens ein bei Temperaturen oberhalb von 180°C calciniertes Hydrotalcit und

    B) mindestens eine Organoübergangsmetaliverbindung.

2. Katalysatorfeststoff nach Anspruch 1, wobei das calcinierte Hydrotalcit teilchenförmig ist und einen mittleren Teilchendurchmesser D50 von 10 bis 200 µm aufweist.

3. Katalysatorfeststoff nach Anspruch 1 oder 2, wobei als calciniertes Hydrotalcit ein Aluminium—Magnesium—-Mischoxid eingesetzt wird.

**4.** Katalysatorfeststoff nach den Ansprüchen 1 bis 3, enthaltend zusätzlich

C) mindestens eine kationenbildende Verbindung.

**5.** Katalysatorfeststoff nach Anspruch 4, wobei die katiumionenbildende Verbindung C) eine offenkettige oder cyclische Aluminoxanverbindung der allgemeinen Formel (V) oder (VI) ist.

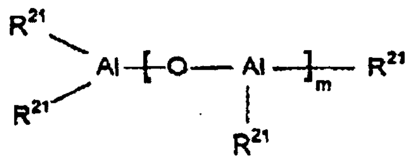

(V)

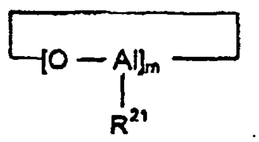

(VI)

in denen

$R^{21}$ eine $C_1$-$C_4$-Alkylgruppe bedeutet und m für eine ganze Zahl von 5 bis 30 steht.

**6.** Katalysatorfeststoff nach den Ansprüchen 1 bis 5, wobei der Katalysatorfeststoff als weitere Komponente D) eine oder mehrere Metallverbindungen der allgemeinen Formel (IXI),

$$M^3(R^{22})_r(R^{23})_s(R^{24})_t \quad \text{(IX)}$$

in der

| | |
|---|---|
| $M^3$ | ein Alkali—, ein Erdalkalimetall oder ein Metall der 13. Gruppe des Periodensystems bedeutet, |
| $R^{22}$ | Wasserstoff, $C_1$—$C_{10}$—Alkyl, $C_6$—$C_{15}$—Aryl, Alkylaryl oder Arylalkyl mit jeweils 1 bis 10 C—Alomen im Alkylrest und 6 bis 20 C—Atomen im Arylrest, |
| $R^{23}$ und $R^{24}$ | Wasserstoff, Halogen, $C_1$—$C_{10}$—Alkyl, $C_6$—$C_{15}$—Aryl, Alkylaryl, Arylalkyl oder Alkoxy mit jeweils 1 bis 10 C—Atomen im Alkylrest und 6 bis 20 C— Atomen im Arylrest, |
| r | eine ganze Zahl von 1 bis 3 |

und

s und t ganze Zahlen von 0 bis 2 bedeuten, wobei die Summe r+s+t der Wertigkeit von $M^3$ entspricht,

enthält.

**7.** Vorpolymerisierter Katalysatorfeststoff, enthaltend einen Katalysatorfeststoff nach den Ansprüchen 1 bis 6 und hinzupolymerisierte lineare $C_2$-$C_{10}$-1-Alkene im Massenverhältnis von 1:0,1 bis 1:200.

**8.** Verwendung eines Katalysatorfeststoffs nach den Ansprüchen 1 bis 7 zur Polymerisation oder Copolymerisatlon von Olefinen.

**9.** Verfahren zur Herstellung von Polyolefinen durch Polymerisation oder Copolymerisation von Olefinen in Gegenwart eines Katalysatorfeststoffs nach den Ansprüchen 1 bis 7.

**10.** Verfahren nach Anspruch 9, wobei man bei der Polymerisation als Monomere Propylen oder eine Monomermischung aus Propylen, Ethylen und/oder $C_2$-$C_{12}$-1-Alkene, die mindestens 50 mol—% Propylen aufweist, einsetzt.

**Claims**

**1.** A catalyst solid for olefin polymerization comprising

A) at least one hydrotalcite calcined at above 180°C and

B) at least one organic transition metal compound.

**2.** A catalyst solid as claimed in claim 1, wherein the calcined hydrotalcite is particulate and has a mean particle diameter $d_{50}$ of from 10 to 200 µm.

**3.** A catalyst solid as claimed in claim 1 or 2, wherein an aluminum-magnesium mixed oxide is used as calcined hydrotalcite.

**4.** A catalyst solid as claimed in any of claims 1 to 3 which further comprises

C) at least one cation-forming compound.

**5.** A catalyst solid as claimed in claim 4, wherein the cation-forming compound C) is an open-chain or cyclic aluminoxane compound of the formula (V) or (VI),

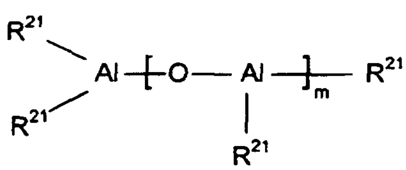

(V)

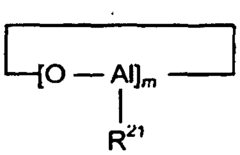

(VI)

where

$R^{21}$ is a $C_1$-$C_4$-alkyl group and m is an integer from 5 to 30.

**6.** A catalyst solid as claimed in any of claims 1 to 5 which further comprises, as additional component D), one or more metal compounds of the formula (IX)

$$M^3(R^{22})_r(R^{23})_s(R^{24})_t \quad (IX)$$

where

$M^3$ is an alkali metal, an alkaline earth metal or a metal of group 13 of the Periodic Table,

$R^{22}$ is hydrogen, $C_1$-$C_{10}$-alkyl, $C_6$-$C_{15}$-aryl, alkylaryl or arylalkyl each having from 1 to 10 carbon atoms in the alkyl part and from 6 to 20 carbon atoms in the aryl part,

$R^{23}$ and $R^{24}$ are each hydrogen, halogen, $C_1$-$C_{10}$-alkyl, $C_6$-$C_{15}$-aryl, alkylaryl, arylalkyl or alkoxy each having from 1 to 10 carbon atoms in the alkyl radical and from 6 to 20 carbon atoms in the aryl radical,

r is an integer from 1 to 3,

and

s and t are integers from 0 to 2, with the sum r+s+t corresponding to the valence of $M^3$.

**7.** A prepolymerized catalyst solid comprising a catalyst solid as claimed in any of claims 1 to 6 and linear $C_2$-$C_{10}$-1-alkenes polymerized onto it in a mass ratio of from 1:0.1 to 1:200.

**8.** The use of a catalyst solid as claimed in any of claims 1 to 7 for the polymerization or copolymerization of olefins.

**9.** A process for preparing polyolefins by polymerization or copolymerization of olefins in the presence of a catalyst solid as claimed in any of claims 1 to 7.

**10.** A process as claimed in claim 9, wherein the monomer used in the polymerization is propylene or a monomer mixture of propylene, ethylene and/or $C_2$-$C_{12}$-1-alkenes containing at least 50 mol% of propylene.

## Revendications

**1.** Solide catalyseur pour la polymérisation d'oléfines, contenant

A) au moins une hydrotalcite calcinée à des températures supérieures à 180°C, et
B) au moins un composé organique d'un métal de transition.

**2.** Solide catalyseur selon la revendication 1, où l'hydrotalcite calcinée est particulaire et a une granulométrie moyenne D50 de 10 à 200 µm.

**3.** Solide catalyseur selon la revendication 1 ou 2, où on utilise en tant qu'hydrotalcite calcinée un oxyde mixte d'aluminium et de magnésium.

**4.** Solide catalyseur selon les revendications 1 à 3, qui contient en outre

C) au moins un composé formant des cations.

**5.** Solide catalyseur selon la revendication 4, où le composé C) formant des cations est un composé de l'aluminium à chaîne ouverte ou cyclique de formule générale (V) ou (VI)

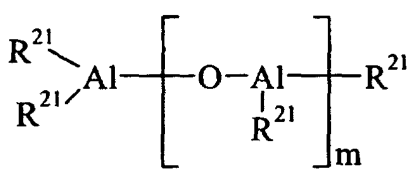

(V)

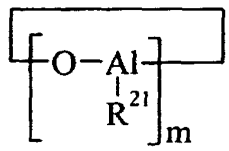

(VI)

dans lesquelles

$R^{21}$ est un groupe alkyle en $C_1$-$C_4$, et m est un nombre entier de 5 à 30.

**6.** Solide catalyseur selon les revendications 1 à 5, où le solide catalyseur contient, en tant qu'autre composant D), un ou plusieurs composés métalliques de formule générale (IX)

$$M^3(R^{22})_r(R^{23})_s(R^{24})_t \qquad (IX)$$

dans laquelle

$M^3$ est un métal alcalin ou alcalino-terreux ou un métal du 13ème Groupe du Tableau Périodique,

$R^{22}$ est un atome d'hydrogène ou un groupe alkyle en $C_1$-$C_{10}$, aryle en $C_6$-$C_{15}$, alkylaryle ou arylalkyle, ayant chacun de 1 à 10 atomes de carbone dans le fragment alkyle et de 6 à 20 atomes de carbone dans le fragment aryle,

$R^{23}$ et $R^{24}$ représentent chacun un atome d'hydrogène ou d'halogène ou un groupe alkyle en $C_{1-}C_{10}$, aryle en $C_6$-$C_{15}$, alkylaryle, arylalkyle ou alcoxy ayant chacun de 1 à 10 atomes de carbone dans le fragment alkyle et de 6 à 20 atomes de carbone dans le fragment aryle,

r est un nombre entier de 1 à 3, et

s et t sont des nombres entiers de 0 à 2, la somme r+s+t correspondant à la valence de $MP^3$.

**7.** Solide catalyseur prépolymérisé, contenant un solide catalyseur selon les revendications 1 à 6, et des 1-alcènes en $C_2$-$C_{10}$, à chaîne droite, ajoutés par polymérisation, selon un rapport en masse de 1:0,1 à 1:200.

**8.** Utilisation d'un solide catalyseur selon les revendications 1 à 7 pour la polymérisation ou la copolymérisation d'oléfines.

**9.** Procédé de préparation de polyoléfines par polymérisation ou copolymérisation d'oléfines en présence d'un solide catalyseur selon les revendications 1 à 7.

**10.** Procédé selon la revendication 9, dans lequel, lors de la polymérisation, on utilise en tant que monomère du propylène ou un mélange de monomères constitué de propylène, d'éthylène et/ou de 1-alcènes en $C_2$-$C_{12}$, qui contient au moins 50 % en moles de propylène.

FIG.1

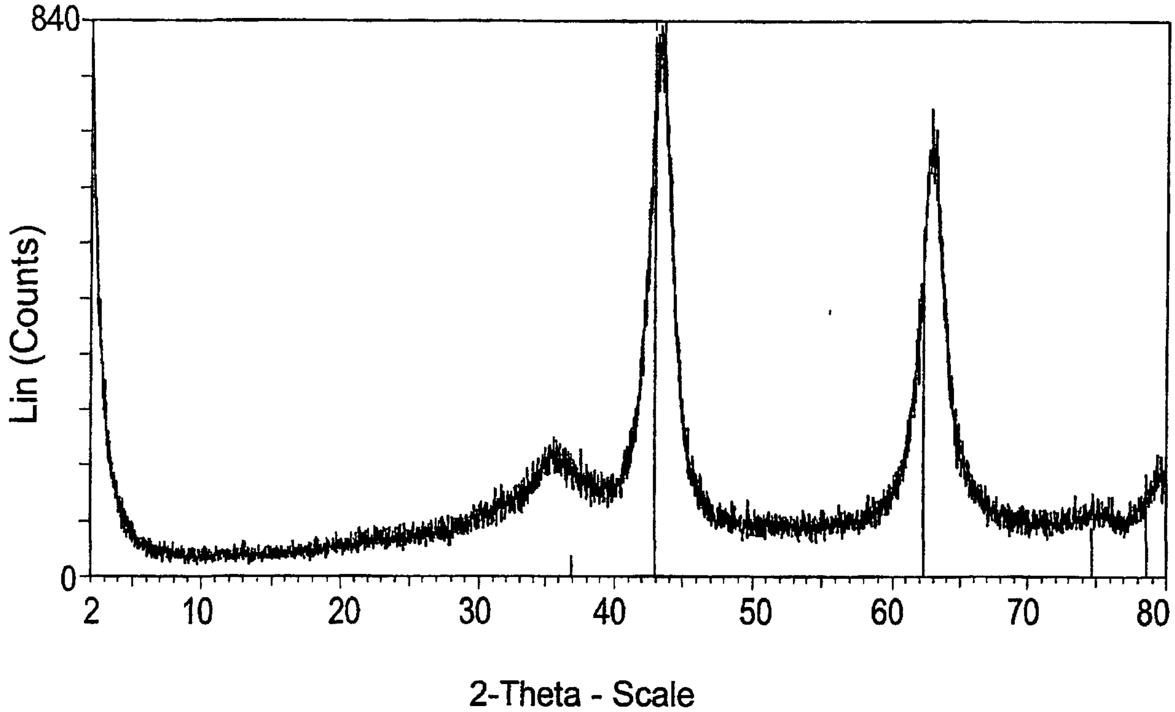

FIG.2

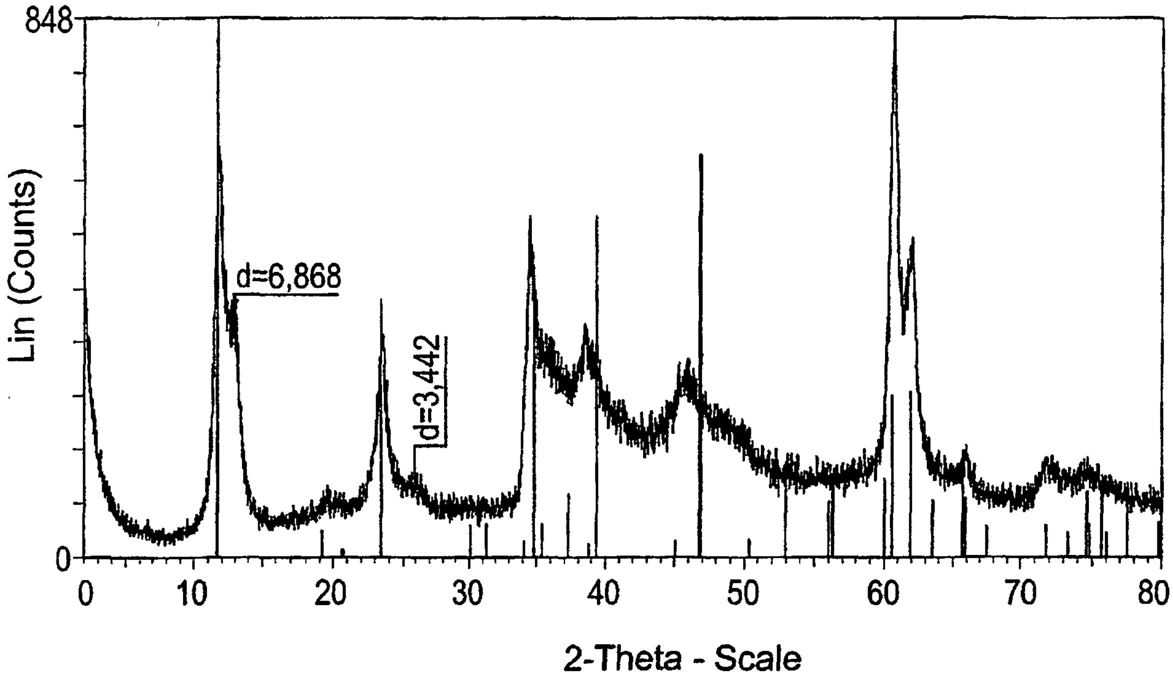
848
Lin (Counts)
d=6,868
d=3,442
0
0
10
20
30
40
50
60
70
80
2-Theta - Scale

FIG.3

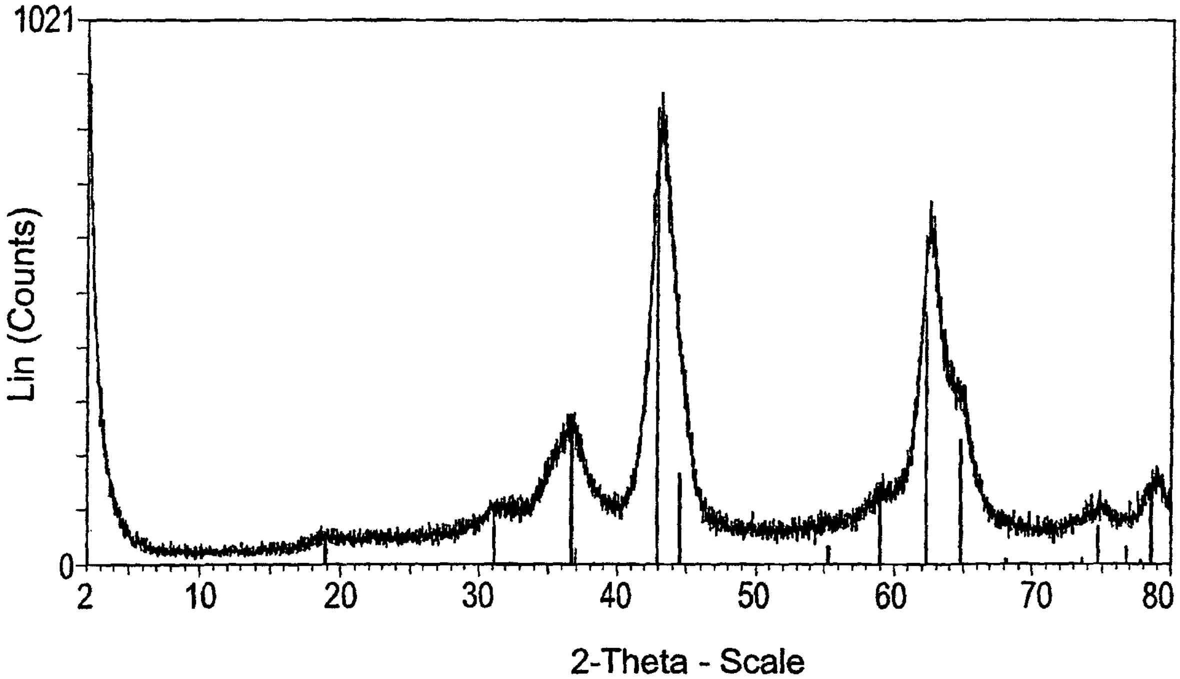

FIG.4